# EUROPÄISCHE PATENTSCHRIFT

(11) **EP 3 697 587 B1**
(45) Veröffentlichungstag und Bekanntmachung des Hinweises auf die Patenterteilung: **16.02.2022**
(21) Anmeldenummer: 18785315.5
(22) Anmeldetag: 05.10.2018
(51) Int. Cl.: B29B 7/42, B29C 48/45, B29C 48/565, B29C 48/685

(54) **MISCH- UND KNETMASCHINE MIT UNGLEICHMÄSSIG ÜBER DIE INNENUMFANGSFLÄCHE DES GEHÄUSES VERTEILTEN AUFNAHMEN FÜR KNETELEMENTE**
MIXING AND KNEADING MACHINE WITH RECEIVING AREAS FOR KNEADING ELEMENTS, SAID RECEIVING AREAS BEING DISTRIBUTED OVER THE INNER CIRCUMFERENTIAL SURFACE OF THE HOUSING IN A NON-UNIFORM MANNER
MACHINE DE MÉLANGE ET DE MALAXAGE PRÉSENTANT DES LOGEMENTS RÉPARTIS DE MANIÈRE IRRÉGULIÈRE SUR LA SURFACE PÉRIPHÉRIQUE INTERNE DE L'ENCEINTE POUR DES ÉLÉMENTS DE MALAXAGE

(30) Priorität: 17.10.2017 EP 17196908; 19.01.2018 EP 18152448
(43) Veröffentlichungstag der Anmeldung: 26.08.2020
(73) Patentinhaber: Buss AG, 4133 Pratteln (CH)
(72) Erfinder: SCHÖTZAU, Martin, 4302 Augst (CH); WALTER, Wolfgang, 73434 Aalen (DE)
(74) Vertreter: Henkel & Partner mbB
(86) Internationale Anmeldenummer: PCT/EP2018/077199
(87) Internationale Veröffentlichungsnummer: WO 2019/076656

(56) Entgegenhaltungen:
- EP-A1- 0 082 494
- EP-A2- 0 140 846
- CH-A- 464 656
- DE-A1- 2 235 784
- DE-C1- 4 141 328
- US-A- 3 938 783
- US-B1- 6 250 791

## Beschreibung

Die vorliegende Erfindung betrifft eine Misch- und Knetmaschine für kontinuierliche Aufbereitungsprozesse mit i) einem Gehäuse, in welchem ein von der Innenumfangsfläche des Gehäuses begrenzter hohler Innenraum ausgebildet ist, mit ii) einer sich zumindest abschnittsweise in axialer Richtung durch den Innenraum erstreckenden Schneckenwelle, die im Betrieb in dem Innenraum rotierbar und gleichzeitig in der axialen Richtung translatorisch hin- und her bewegbar, und mit iii) mindestens sechs in dem Gehäuse vorgesehenen, sich von der Innenumfangsfläche des Gehäuses in das Gehäuse zumindest abschnittsweise hinein erstreckenden Aufnahmen für Knetelemente, wobei die Aufnahmen an der Innenumfangsfläche des Gehäuses in zumindest zwei sich in der axialen Richtung über zumindest einen Abschnitt der Innenumfangsfläche des Gehäuses erstreckenden Reihen angeordnet sind, wobei mindestens zwei der zumindest zwei Reihen jeweils mindestens drei Aufnahmen für Knetelemente umfassen, wobei iv) die Schneckenwelle einen Wellenstab umfasst, auf dessen Umfangsfläche mindestens zwei sich von dem Wellenstab radial nach außen in Richtung der Innenumfangsfläche des Gehäuses erstreckende Flügelelemente angeordnet sind.

Derartige Misch- und Knetmaschinen werden insbesondere zum Aufbereiten von plastischen und/oder pastösen Massen eingesetzt. Beispielsweise dienen sie dem Verarbeiten von zähplastischen Massen, dem Homogenisieren und Plastifizieren von Kunststoffen, dem Einarbeiten von Füll- und Verstärkungsstoffen sowie dem Herstellen von Ausgangsmaterialien für die Lebensmittelindustrie. Die Schneckenwelle bildet hierbei das Arbeitsorgan, welches das zu verarbeitende Material in axialer Richtung vorwärts transportiert bzw. fördert und dabei die Komponenten des Materials miteinander vermischt.

Insbesondere können diese Misch- und Knetmaschinen auch so betrieben werden, dass zunächst eine Schmelze erzeugt wird, bevor die so erzeugte Schmelze durch die Schneckenwelle in axialer Richtung durch die Misch- und Knetmaschine gefördert und dabei homogenisiert wird. In Abhängigkeit von dem zu mischenden Material kann die in der Misch- und Knetmaschinen eingestellte Temperatur zumindest abschnittsweise zwischen 50° und 400°C betragen. Dabei kann der Misch- und Knetmaschine ein Gemenge aus zumindest zwei Bestandteilen, sog. "dryblend", zugeführt werden, von dem die schmelzfähigen Bestandteile in der Misch- und Knetmaschinen aufgeschmolzen werden und sodann alle Bestandteile homogenisiert werden. Bei anderen Prozessen wiederum ist es zweckmäßig, zunächst im stromaufwärts liegenden axialen Abschnitt der Misch- und Knetmaschinen aus einem Bestandteil eine Schmelze zu erzeugen und danach in dem stromabwärts davon liegenden axialen Abschnitt ein oder mehrere weitere Bestandteile hinzuzufügen, bevor die Bestandteile des so entstehenden Gemischs weiter stromabwärts homogenisiert werden.

Solche gattungsgemäßen Misch- und Knetmaschinen sind beispielsweise aus der CH 278 575 A sowie aus der CH 464 656 bekannt.

Bei diesen Misch- und Knetmaschinen führt die Schneckenwelle nicht nur eine rotative Bewegung aus, sondern bewegt sich gleichzeitig auch in der axialen Richtung, d.h. in der Richtung der Schneckenwelle, translatorisch vor und zurück. Der Bewegungsablauf zeichnet sich daher vorzugsweise dadurch aus, dass die Schneckenwelle in der axialen Richtung gesehen eine der Rotation überlagerte oszillatorische Bewegung, also eine der Rotation überlagerte Sinusbewegung ausführt. Dieser Bewegungsablauf ermöglicht das gehäuseseitige Einbringen von Einbauten, nämlich von Knetelementen, wie von Knetbolzen oder von Knetzähnen. Knetbolzen sind beispielsweise in entsprechende, an der Innenumfangsfläche des Gehäuses angeordnete Aufnahmen eingeschraubte Bolzen, wobei die Knetbolzen sowohl massiv als auch innen hohl ausgeführt sein können. Im letzteren Fall kann dem Innenraum der Misch- und Knetmaschinen über die innen hohlen Bolzen ein Fluid zugeführt werden, um Teil des in dem Innenraum befindlichen Gemischs zu werden. Knetzähne haben eine spezielle Form, die mit den Flügelelementen der Schneckenwelle, d.h. den Knetflügeln, zusammenwirkt. Wegen des Vorhandenseins der Knetbolzen oder der Knetzähne verläuft die auf der Hauptwelle, dem sogenannten Wellenstab, angeordnete Schnecke nicht - in Querschnittsrichtung des Wellenstabs gesehen - durchgehend, sondern ist in eine Mehrzahl von einzelnen Flügelelementen unterteilt. Die Rotation und die translatorische Bewegung der Schneckenwelle in axialer Richtung werden so gesteuert, dass die einzelnen Flügelelemente in die Nähe der entsprechenden Knetelemente gelangen, um das zu mischende und knetende Material zu verdichten und eine Scherwirkung auf dieses auszuüben, um so den Mischungs- und/oder Knetvorgang zu befördern, ohne dass die Knetelemente mit den Flügelelementen kollidieren. Solche Misch- und Knetmaschinen sind insbesondere von der Firma BUSS AG in Pratteln in der Schweiz bekannt und werden auch unter dem Markennamen BUSS Ko-Kneter vertrieben.

Typischerweise umfasst das Knetergehäuse drei oder vier sich in axialer Richtung der Misch- und Knetmaschine erstreckende Reihen von Knetelementen, wobei die einzelnen Reihen von Knetelementen gleichmäßig über den Querschnittsumfang der Innenumfangsfläche des Knetergehäuse verteilt sind. Mit anderen Worten sind die Reihen von Knetelementen über den Querschnittsumfang der üblicherweise zylindrischen Innenumfangsfläche des Knetergehäuse so verteilt, dass die Winkelabstände zwischen den Knetelementen der verschiedenen, sich in axialer Richtung erstreckenden Reihen auf dem kreisrunden Querschnittsumfang der zylindrischen Innenumfangsfläche des Knetergehäuses jeweils gleich sind. Weist die Misch- und Knetmaschine beispielsweise 6 Knetelementreihen auf, betragen die Winkelabstände zwischen jeweils zwei benachbarten Knetelementen auf dem Querschnittsumfang der Innenumfangsfläche des Knetergehäuses jeweils 60°. Dabei sind die Knetelemente der einzelnen Reihen gegenüber denen benachbarter Reihen auf der Innenumfangsfläche des Gehäuses üblicherweise geringfügig, in der axialen Richtung des Knetergehäuses gesehen, versetzt angeordnet, damit die einzelnen Flügelelemente der Schneckenwelle nicht mit den Knetbolzen kollidieren, wenn die Schneckenwelle rotiert und sich gleichzeitig translatorisch vor- und zurückbewegt. Dabei erstrecken sich die einzelnen Knetelemente, welche in den Aufnahmen der Gehäuseinnenwand fixiert sind, von der Innenumfangsfläche des Gehäuses radial in den von der Gehäuseinnenumfangsfläche begrenzten zylindrischen Innenraum hinein. Häufig ist das Gehäuse mehrteilig ausgestaltet. Dabei umfasst das Gehäuse wenigstens zwei miteinander verbundene Gehäuseteile, von denen jedes aus einem Außengehäuse und einer an dessen Innenumfangsfläche angeordneter austauschbarer Gehäuseschale bzw. Verschleißschale zusammengesetzt sein kann. In der vorliegenden Patentanmeldung wird/werden die Gehäuseschale(n) als Bestandteil des Gehäuses betrachtet. Daher wird in der vorliegenden Patentanmeldung als Gehäuseinnenumfangsfläche die Innenumfangsfläche der Gehäuseschale(n) angesehen, sofern das Gehäuse Gehäuseschale(n) aufweist. Um beispielsweise nach erfahrenem Verschleiß oder bei einer verfahrenstechnischen Anpassung ein leichtes Austauschen von Knetelementen zu gewährleisten, werden die einzelnen Knetelemente häufig durch eine als Aufnahme wirkende Bohrung in die Gehäuseschalen und das Außengehäuse gesteckt und von außen mittels einer an der Außenumfangsfläche des Außengehäuses angeordneten Gewindemutter gesichert. Dadurch ist ein Wechsel von Knetelementen einfach möglich. Andere Misch- und Knetmaschinen weisen Knetelemente auf, die mittels eines Presssitzes in den Aufnahmen der Innenumfangsfläche der Gehäuseschale bzw. des Gehäuses befestigt werden. Dann können die Knetelemente nur schwer ausgetauscht werden, denn sie müssen zunächst ausgepresst werden und neue Knetelemente müssen eingepresst werden, wozu die einzelnen Gehäuseteile (Schalen) ausgebaut werden müssen.

Die Anzahl und die Geometrie der Flügelelemente ist naturgemäß an die Anzahl der Knetelementreihen angepasst. Sind auf der Innenumfangsfläche des Gehäuses beispielsweise vier Reihen mit Knetelementen angeordnet, kann die Schneckenwelle beispielsweise, in dem Querschnitt gesehen, auf deren Umfang vier Flügelelemente aufweisen, zwischen denen jeweils ein genügend breiter Abstand vorsehen ist, damit sich die Knetelemente durch diese Abstände hindurchbewegen können.

Häufig sind die beschriebenen Misch- und Knetmaschinen in axialer Richtung in verschiedene Verfahrensabschnitte unterteilt, wobei jeder Verfahrensabschnitt gemäß seiner während des Betriebs zugeordneten Aufgabe mit entsprechender Anzahl bzw. Geometrie an Flügelelementen und Knetelementen besetzt ist. Beispielsweise umfasst eine Misch- und Knetmaschinen in axialer Richtung, je nach zu mischendem Material, einen am stromaufwärtigen Ende liegenden Einzugsabschnitt, in dem die zu mischenden bzw. zu knetenden Bestandteile in die Maschine eingebracht werden, einen sich daran stromabwärts anschließenden Schmelzabschnitt, in dem die Bestandteile geschmolzen werden, einen Misch- und Dispergierabschnitt, in dem etwaige Aggregate der Bestandteile des Materials zerkleinert sowie möglichst homogen miteinander vermischt werden, und einen Entgasungsabschnitt, in dem die Mischung entgast wird. Es ist bereits vorgeschlagen worden, in einzelnen Abschnitten der Misch- und Knetmaschine eine andere Anzahl von Knetelementen vorzusehen als in anderen Abschnitten, um so die Verhältnisse in den einzelnen Abschnitten an die Erfordernisse der verschiedenen Verfahrensabschnitte anzupassen. Hierzu ist es möglich, die Gehäuseschale aus - in axialer Richtung gesehen - mehreren voneinander getrennten Gehäuseschalenabschnitten vorzusehen, was es erlaubt, einzelne axiale Abschnitte des Gehäuses mit einer unterschiedlichen Anzahl von Knetelementen auszustatten. Beispielsweise ist es bekannt, die Schneckenwelle einer Misch- und Knetmaschine abschnittsweise dreiflüglig und abschnittsweise vierflüglig auszugestalten und entsprechend dazu korrespondierende Abschnitte der Gehäuseinnenwand der Misch- und Knetmaschine mit drei bzw. vier Reihen von Knetelementen auszustatten. Dies kann dadurch realisiert werden, dass das Gehäuse in mehrere Gehäuseschalen unterteilt ist, von denen einige drei Reihen von Aufnahmen für Knetelemente aufweisen und andere vier Reihen. Hingegen ist es nicht möglich, anstelle der Schale(n) mit drei Reihen von Aufnahmen für Knetelemente auch Schale(n) mit vier Reihen vorzusehen und nur drei davon mit Knetelementen zu bestücken, da die Teilung von 120° (dreiflüglig) nicht zu der Teilung von 90°, wie sie vier Flügelelemente haben, passt. Wenn daher eine für ein spezielles zu mischendes Ausgangsmaterial hinsichtlich der Bestückung der einzelnen Verfahrensabschnitte mit Reihen von Knetelementen und Vorsehen von dazu korrespondierenden Flügelelementen auf dem Wellenstab der Schneckenwelle vorgesehene Einrichtung für eine andere Anwendung unter Einsatz eines anderen zu mischendes Ausgangsmaterial optimiert werden soll, müssen ein oder mehrere der Gehäuseschalen durch entsprechende ein oder mehrere andere Gehäuseschalen mit anderer Bestückung von Knetelementen ersetzt werden und in Anpassung daran der bzw. die dazu korrespondierende(n) Abschnitt(e) der Schneckenwelle mit entsprechenden anderen Flügelelementen ausgestattet werden.

Insgesamt ist es im Stand der Technik aufwendig, eine Misch- und Knetmaschine in Anpassung an ein anderes zu mischendes Ausgangsmaterial umzurüsten, insbesondere was die Anzahl der Reihen von Knetelementen und die entsprechende Flügelelementanzahl an der Schneckenwelle angeht.

Es ist daher die Aufgabe der vorliegenden Erfindung, eine Misch- und Knetmaschine bereitzustellen, welche im Hinblick auf die Anzahl und Anordnung der Knetelemente leicht umrüstbar ist, und zwar so, dass sich die Misch- und Knetmaschine auch nach der Umrüstung durch einen optimalen Wirkungsgrad in Bezug auf Materialdurchsatz pro Zeiteinheit auszeichnet.

Diese Aufgabe wird erfindungsgemäß durch eine Misch- und Knetmaschine für kontinuierliche Aufbereitungsprozesse gemäss Anspruch 1 gelöst, wobei die Misch- und Knetmaschine umfasst:
- ein Gehäuse, in welchem ein von der Innenumfangsfläche des Gehäuses begrenzter hohler Innenraum ausgebildet ist,
- eine sich zumindest abschnittsweise in axialer Richtung durch den Innenraum erstreckende Schneckenwelle, die im Betrieb in dem Innenraum rotierbar und gleichzeitig in der axialen Richtung translatorisch hin- und her bewegbar ist, und
- mindestens sechs, bevorzugt mindestens zehn und besonders bevorzugt mindestens sechzehn in dem Gehäuse vorgesehene, sich von der Innenumfangsfläche des Gehäuses in das Gehäuse zumindest abschnittsweise hinein erstreckende Aufnahmen für Knetelemente, wobei die Aufnahmen an der Innenumfangsfläche des Gehäuses in zumindest zwei sich in der axialen Richtung über zumindest einen Abschnitt der Innenumfangsfläche des Gehäuses erstreckenden Reihen angeordnet sind, wobei mindestens zwei der zumindest zwei Reihen jeweils mindestens drei (bevorzugt mindestens fünf und besonders bevorzugt mindestens acht) Aufnahmen für Knetelemente umfassen,
- wobei die Schneckenwelle vorzugsweise einen Wellenstab umfasst, auf dessen Umfangsfläche mindestens zwei sich von dem Wellenstab radial nach außen in Richtung der Innenumfangsfläche des Gehäuses erstreckende Flügelelemente angeordnet sind,
wobei sich zumindest in einem in der axialen Richtung des Gehäuses erstreckenden Abschnitt die Aufnahmen für Knetelemente, im Querschnitt des Gehäuses gesehen, über den durch die Innenumfangsfläche des Gehäuses definierten Umfang hinweg ungleichmäßig verteilen (bevorzugt die Aufnahmen für Knetelemente der zumindest zwei Reihen, im Querschnitt des Gehäuses gesehen, über den durch die Innenumfangsfläche des Gehäuses definierten Umfang hinweg ungleichmäßig verteilen).

Die erfindungsgemäße Misch- und Knetmaschine zeichnet sich dadurch aus, dass sich die Aufnahmen für Knetelemente der einzelnen der zumindest zwei sich in der axialen Richtung über zumindest einen Abschnitt der Innenumfangsfläche des Gehäuses erstreckenden Reihen, im Querschnitt des Gehäuses gesehen, über den durch die Innenumfangsfläche des Gehäuses definierten Umfang hinweg ungleichmäßig verteilen. Unter einer ungleichmäßigen Verteilung der Aufnahmen für Knetelemente über den durch die Innenumfangsfläche des Gehäuses definierten Umfang wird im Sinne der vorliegenden Erfindung verstanden, dass -im Querschnitt des Gehäuses betrachtet - von allen Abständen bzw. Winkelabständen zwischen jeweils zwei Aufnahmen für Knetelemente benachbarter Reihen auf der Innenumfangsfläche des Gehäuses mindestens zwei Abstände bzw. mindestens zwei Winkelabstände voneinander verschieden sind. Wenn also der Abschnitt des Gehäuses vier Reihen mit jeweils mindestens fünf Aufnahmen für Knetelemente umfasst, beträgt der Winkelabstand der Aufnahmen benachbarter Reihen auf der Innenumfangsfläche des Gehäuses nicht - wie in dem Stand der Technik - jeweils 90°, sondern sind mindestens zwei der vier Winkelabstände von 90° verschieden. Wie vorstehend dargelegt, sind die Aufnahmen für Knetelemente jeder Reihe gegenüber denen benachbarter Reihen, in der axialen Richtung des Knetergehäuses gesehen, vorzugsweise geringfügig versetzt angeordnet, damit die einzelnen Flügelelemente der Schneckenwelle nicht mit den darin aufgenommenen Knetbolzen kollidieren, wenn die Schneckenwelle rotiert und sich gleichzeitig translatorisch vor- und zurückbewegt. Unter Winkelabstand von Aufnahmen zweier benachbarter Reihen auf der Innenumfangsfläche des Gehäuses wird daher der Winkelabstand zwischen der Aufnahme einer ersten Reihe und dem Punkt der durch die Mittelpunkte der Aufnahmen der benachbarten Reihe verlaufenden Gerade, der - bezogen auf die Längsrichtung des Gehäuses - senkrecht ober- bzw. unterhalb der Aufnahme der ersten Reihe liegt, auf der Innenumfangsfläche des Gehäuses verstanden. Erfindungsgemäß sind also im Gegensatz zu den aus dem Stand der Technik bekannten Misch- und Knetmaschinen nicht alle Abstände auf der Innenumfangsfläche des Gehäuses zwischen jeweils zwei Aufnahmen für Knetelemente benachbarter Reihen gleich.

Anders als beispielsweise im Falle der Misch- und Knetmaschine gemäß der CH 464 656 A, bei der, im Querschnitt des Gehäuses mit kreisförmiger Innenumfangsfläche gesehen, sechs Reihen von Aufnahmen für Knetelemente genau in Winkelabständen von jeweils 60° auf der Innenumfangsfläche des Gehäuses vorgesehen sind, damit dies exakt zu einer drei- oder sechsflügligen Schnecke passt, sieht die vorliegende Erfindung somit bewusst eine Abweichung von einer exakten Teilung vor. Dies dient dazu, einfach mehrere Varianten von Besetzungen der Aufnahmen im Hinblick auf die Anzahl und Anordnung der Knetelemente alternativ verwirklichen zu können, und zwar unter Beibehaltung eines optimalen Wirkungsgrades der Misch- und Knetmaschine in Bezug auf den Materialdurchsatz pro Zeiteinheit. Sind beispielsweise an der Gehäuseinnenumfangsfläche sechs sich in axialer Richtung der Misch- und Knetmaschine erstreckende Reihen von Aufnahmen für Knetelemente vorgesehen, dann wird durch die im Querschnitt gesehene Ungleichverteilung der Reihen auf der Innenumfangsfläche des Gehäuses bewirkt, dass man alternativ zu einer Besetzung aller Reihen mit Knetelementen auch eine Besetzung von nur vier oder drei Reihen mit Knetelementen vorsehen kann und zwei oder drei der Aufnahmereihen unbesetzt lassen kann, wobei dennoch die besetzten Reihen so zueinander beabstandet sind, dass ein optimaler Wirkungsgrad der Misch- und Knetmaschine in Bezug auf den Materialdurchsatz pro Zeiteinheit erreicht wird. Die entsprechende Besetzung der Schneckenwelle mit Flügelelementen kann bzw. muss passend dazu gestaltet werden; es kann bzw. wird also passend zu der ungleichmäßigen Verteilung der Aufnahmen über die Innenumfangsfläche des Gehäuses hinweg eine ungleichmäßige Erstreckung der Flügelelemente über Winkelabschnittsbereiche der Schneckenwelle vorgesehen werden. Im Unterscheid dazu führt eine Besetzung von 6 gemäß dem Stand der Technik gleichmäßig beabstandeten Reihen von Aufnahmen bei einer Besetzung von lediglich vier bzw. drei Reihen, wie weiter untenstehend genauer begründet, zu einem Verlust an Wirkungsgrad bei dem Betrieb der Misch- und Knetmaschine.

Unter einer Aufnahme für Knetelemente wird im Sinne der vorliegenden Erfindung ein Hohlraum an der Innenumfangsfläche des Gehäuses angesehen, der so ausgestaltet ist, dass ein Knetelement, also ein Knetbolzen, ein Knetzahn oder dergleichen, in diesem angeordnet und durch diesen befestigt werden kann, so dass sich das Knetelement von der Innenumfangsfläche des Gehäuses radial nach innen in den hohlen Innenraum hinein erstreckt. Bei der Aufnahme kann es sich um eine Vertiefung, Aussparung, Bohrung oder dergleichen handeln, welche sich mehr oder weniger tief von der Innenumfangsfläche des Gehäuses in das Gehäuse hinein erstreckt. Vorzugsweise ist wenigstens eine der Aufnahmen eine Aussparung, Vertiefung oder Bohrung und sind bevorzugt jede der Aufnahmen eine Aussparung, Vertiefung oder Bohrung. Im Fall eines typischen zweikomponentigen Aufbaus des Gehäuses aus einem Außengehäuse und radial innen daran angeordneter Gehäuseschale erstreckt sich die Aufnahme von der Innenumfangsfläche der Gehäuseschale in diese und ggf. auch in das Außengehäuse hinein und ggf. durch das Außengehäuse hindurch. Im Fall eines einkomponentigen Aufbaus des Gehäuses erstreckt sich somit die Aufnahme von der Innenumfangsfläche des Gehäuses in dieses hinein und ggf. durch dieses hindurch.

Unter einer sich in der axialen Richtung der Misch- und Knetmaschine über zumindest einen Abschnitt der Innenumfangsfläche des Gehäuses erstreckenden Reihe von Aufnahmen für Knetelemente wird im Sinne der vorliegenden Erfindung verstanden, dass eine über die Mittelpunkte der voneinander in axialer Richtung beabstandeten Aufnahmen einer Reihe gelegte Verbindungslinie zumindest im Wesentlichen eine Gerade ist, wobei die maximale Abweichung der Verbindungslinie von einer Gerade weniger als 10°, bevorzugt weniger als 5° und weiter bevorzugt weniger als 2° bezogen auf den Querschnittsumfang der Innenumfangsfläche des Gehäuses beträgt. Dabei kann sich jede der Reihen von Aufnahmen über die gesamte axiale Länge der Gehäuseinnenumfangsfläche erstrecken oder über einen bestimmten Abschnitt der Länge der Gehäuseinnenumfangsfläche. Allerdings umfassen erfindungsgemäß die Reihen zumindest eines axialen Abschnitts des Gehäuses jeweils mindestens drei, bevorzugt mindestens fünf und ganz besonders bevorzugt mindestens acht Aufnahmen für Knetelemente. Vorzugsweise erstrecken sich alle Reihen jeweils über den gleichen Abschnitt der Gehäuseinnenumfangsfläche oder jeweils die gesamte axiale Länge der Gehäuseinnenumfangsfläche.

Das erfindungsgemäße Gehäuse ist vorzugsweise aus mindestens zwei Gehäuseteilen zusammengesetzt, welche zum Öffnen des Gehäuses voneinander wegklappbar oder voneinander trennbar sind, wobei die Gehäuseteile im geschlossenen Zustand vorzugsweise einen im Querschnitt kreisförmigen (hohlen) Innenraum ausbilden.

Erfindungsgemäss sind zumindest auf dem sich in der axialen Richtung des Gehäuses erstreckenden Abschnitt der Umfangsfläche des Wellenstabes der Schneckenwelle, der in dem Abschnitt der Innenumfangsfläche des Gehäuses liegt, über den sich die zumindest zwei, jeweils mindestens drei Aufnahmen für Knetelemente umfassenden Reihen in der axialen Richtung des Gehäuses erstrecken, mindestens sechs sich von dem Wellenstab radial nach außen in Richtung der Innenumfangsfläche des Gehäuses erstreckende Flügelelemente angeordnet, wobei die Flügelelemente auf diesem Abschnitt des Wellenstabes in zumindest zwei sich in der axialen Richtung über diesen Abschnitt der Umfangsfläche des Wellenstabes erstreckenden Reihen angeordnet sind, wobei wenigstens zwei und bevorzugt alle der zumindest zwei Reihen jeweils - in der axialen Richtung gesehen - mindestens drei (bevorzugt mindestens fünf und besonders bevorzugt mindestens acht) Flügelelemente umfassen. Wenn der Wellenstab mehr als zwei Reihen, wie beispielsweise sechs, Reihen von Flügelelementen enthält, umfassen demnach mindestens 2 Reihen jeweils - in der axialen Richtung gesehen - mindestens drei Flügelelemente, wohingegen die übrigen Reihen weniger als drei Flügelelemente oder mehr als drei Flügelelemente umfassen können. Somit können die einzelnen Reihen so bestückt sein, dass in dem Abschnitt - in der axialen gesehen - zweiflüglige und dreiflüglige oder zweiflüglige und vierflüglige oder dreiflüglige und vierflüglige Flügelelemente vorhanden sind. Insbesondere ist es bevorzugt, dass der Wellenstab einen kreisförmigen Querschnitt aufweist und auf diesem Abschnitt der Umfangsfläche des Wellenstabes der Schneckenwelle dieselbe Anzahl von Reihen von Flügelelementen angeordnet ist wie die Anzahl von Reihen von Aufnahmen für Knetelemente, die in dem diesem Abschnitt korrespondierenden Abschnitt der Innenumfangsfläche des Gehäuses angeordnet ist. Zudem ist es bevorzugt, dass die Reihen der Flügelelemente mit denen der Aufnahmen für die Knetelemente korrespondieren, d.h., dass jedem der Aufnahmen für ein Knetelement ein Flügelelement so zugeordnet ist, dass sich während des Betriebs der Misch- und Knetmaschine das Flügelelement an der Aufnahme translatorisch vorbei vor- und zurückbewegt. Bei dieser Ausführungsform ist es ferner bevorzugt, wenn sich die Flügelelemente von zumindest einer der Reihen in dem Wert des Winkelabschnitts, über den sie sich über den Querschnittsumfang des Wellenstabes erstrecken, von dem Wert des Winkelabschnitts der Flügelelemente von zumindest einer anderen der Reihen unterscheiden.

Gemäß einer besonders bevorzugten Ausführungsform der vorliegenden Erfindung ist wenigstens eine der Aufnahmen und sind ganz besonders bevorzugt alle der Aufnahmen Bohrung(en). Ferner ist es bevorzugt, dass sich jede dieser Bohrungen von der Innenumfangsfläche des Gehäuses durch die gesamte Gehäusewand hindurch nach außen erstreckt. Im Fall eines üblichen, einen im Querschnitt kreisförmigen Innenraum begrenzenden Gehäuses, also eines Gehäuses mit zylindrischer Innenumfangsfläche, ist es bei dieser Ausführungsform der vorliegenden Erfindung bevorzugt, dass sich die Bohrungen von der Innenumfangsfläche des Gehäuses durch die gesamte Gehäusewand - bzw. im Falle eines Aufbaus des Gehäuses aus Gehäusewand und Gehäuseschale, durch die gesamte Gehäuseschale und Gehäusewand - hindurch radial nach außen erstrecken und somit an der Außenumfangsfläche des Gehäuses münden. Dadurch wird es ermöglicht, ein in der Bohrung angeordnetes Knetelement oder ein in der Bohrung angeordnetes Fixierelement, dass an der zu der Innenumfangsfläche des Gehäuses orientierten Stirnseite mit dem Knetelement verbindbar ist bzw. verbunden ist, an der Außenseite des Gehäuses durch eine Mutter fest, aber leicht austauschbar zu fixieren. Vorzugsweise erstreckt sich in jeder mit einem Knetelement bestrückten Aufnahme ein mit einem Knetelement verbindbares Fixierelement bis zu einem gewissen Abstand von der Innenumfangsfläche der Gehäuseinnenwand, wobei das Fixierelement an der Außenumfangsfläche des Gehäuses durch eine Mutter fixiert ist. An dem radial inneren Teil der Aufnahme, der sich von Innenumfangsfläche der Gehäuseinnenwand in der Bohrung bis zu dem Ende des Fixierelements erstreckt, ist dann das Knetelement vorgesehen, welches an seinem der Innenumfangsfläche der Gehäuseinnenwand gegenüberliegenden Seite mit dem Fixierelement verbunden ist. Beispielsweise kann der radial innere Teil der Bohrung, in dem das Knetelement eingebracht ist, im Querschnitt vierkantig ausgestaltet sein, um das Knetelement verdrehsicher aufnehmen zu können, wohingegen der radial äußere Teil der Bohrung, in dem das Fixierelement eingebracht ist, im Querschnitt kreisrund ausgestaltet sein kann. Dabei kann das Knetelement mit dem Fixierelement beispielsweise durch Verschrauben, Löten, Schweißen oder heißisostatischen Pressen verbunden sein. Es wird somit bei dieser Ausführungsform auf die Technik des Einpressens der Knetelemente verzichtet. So können die Knetelemente schneller ausgetauscht oder durch einen Blindbolzen ersetzt werden.

Bei einer weiteren bevorzugten Ausführungsform der vorliegenden Erfindung ist die Innenumfangsfläche des Gehäuses im Querschnitt kreisförmig und weicht zumindest einer der im Querschnitt des Gehäuses gesehenen Winkelabstände zwischen jeweils zwei Aufnahmen benachbarter Reihen an der Innenumfangsfläche des Gehäuses von dem Wert von 360°/n um zumindest 1°, bevorzugt um mindestens 2,5°, besonders bevorzugt um mindestens 5° und ganz besonders bevorzugt um mindestens 10° ab, wobei n die Anzahl der Reihen der Aufnahmen ist. Ferner ist es besonders bevorzugt, dass alle Winkelabstände zwischen jeweils zwei Aufnahmen benachbarter Reihen gegenüber dem Wert von 360°/n um zumindest 1°, bevorzugt um zumindest 2,5°, besonders bevorzugt um zumindest 5° und ganz besonders bevorzugt um zumindest 10° abweichen.

Vorzugsweise sind an der Innenumfangsfläche des Gehäuses 2 bis 11, weiter bevorzugt 2 bis 10, weiter bevorzugt 3 bis 9, besonders bevorzugt 4 bis 8, ganz besonders bevorzugt 5 bis 7 und höchst bevorzugt 6 sich in der axialen Richtung über zumindest einen Abschnitt der Innenumfangsfläche des Gehäuses erstreckende Reihen von Aufnahmen für Knetelemente angeordnet. Wie vorstehend dargelegt, umfassen erfindungsgemäß mindestens zwei der zumindest zwei Reihen jeweils mindestens drei Aufnahmen für Knetelemente, bevorzugt jeweils mindestens fünf Aufnahmen für Knetelemente und besonders bevorzugt jeweils mindestens acht Aufnahmen für Knetelemente. Dabei können alle Reihen dieselbe Anzahl von Aufnahmen oder eine andere Anzahl von Aufnahmen aufweisen. Allerdings ist es bevorzugt, dass alle Reihen dieselbe Anzahl von Aufnahmen aufweisen und die Aufnahmen aller Reihen untereinander jeweils gleich beabstandet sind, wobei jedoch - wie vorstehend dargelegt - die Aufnahmen jeder Reihe gegenüber denen der benachbarten Reihen, in der axialen Richtung des Knetergehäuses gesehen, geringfügig versetzt angeordnet sein können, damit die einzelnen Flügelelemente der Schneckenwelle nicht mit den darin aufgenommenen Knetbolzen kollidieren, wenn die Schneckenwelle rotiert und sich gleichzeitig translatorisch vor- und zurückbewegt.

Von den Aufnahmen können alle mit entsprechenden Knetelementen besetzt sein. Alternativ dazu ist es auch möglich und bevorzugt, dass nicht alle Aufnahmen und weiter bevorzugt nicht alle Reihen der Aufnahmen mit Knetelementen besetzt sind. Dabei ist es bevorzugt, dass von den n Reihen von Aufnahmeelementen höchstens n-1 Reihen mit Knetelementen besetzt sind. Durch das redundante Vorsehen von Aufnahmen kann die Misch- und Knetmaschine flexibel mit Knetelementen besetzt werden.

Bei einer speziellen bevorzugten Ausführungsform sind an der Innenumfangsfläche des Gehäuses sechs sich in der axialen Richtung erstreckende Reihen von Aufnahmen für Knetelemente vorgesehen, von denen sich jeweils zwei Reihen unter Bildung von drei Paaren an der Innenumfangsfläche des Gehäuses paarweise einander gegenüberliegen. Dabei ist es bevorzugt, dass von den drei jeweils zwischen zwei benachbarten Paaren gebildeten Winkelabständen zwei Winkelabstände des Querschnittumfangs der Gehäuseinnenwand zwischen 20° und 70° betragen und ein Winkelabstand zwischen mehr als 70° und 120° beträgt. Die Summe der drei Winkelabstände muss natürlich 180° betragen. Dabei ist es bevorzugt, wenn zwei Winkelabstände des Querschnittumfangs der Gehäuseinnenwand zwischen 30° und 60° betragen und ein Winkelabstand zwischen 70° und 110° beträgt und besonders bevorzugt zwei Winkelabstände zwischen 40° und 50° betragen und ein Winkelabstand zwischen 80° und 100° beträgt. Beispielsweise ist eine Anordnung der Reihen ganz besonders bevorzugt, bei der zwei Winkelabstände etwa 45° betragen und der andere Winkelabstand etwa 90° beträgt.

Alternativ dazu können die Abstände der Aufnahmereihen an der Innenumfangsfläche des Gehäuses gegenüber den vorstehenden Werten verschoben sein. Beispielsweise kann der eine Abstand bei 90°+d liegen, wobei dann die beiden anderen Abstände bei 45°-d/2 liegen. Alternativ dazu kann der eine Abstand bei 90°-d liegen, wohingegen die beiden anderen Abstände bei 45°+d/2 liegen, wobei d vorzugsweise einen Wert zwischen >0° und 10° einnimmt.

Bei einer dazu alternativen Ausführungsform sind an der Innenumfangsfläche des Gehäuses sechs sich in der axialen Richtung erstreckende Reihen von Aufnahmen für Knetelemente vorgesehen, wobei die Winkelabstände von zwei der Reihen zu jeweils einer benachbarten Reihe 60° betragen, wohingegen zwei Winkelabstände zwischen anderen Reihen 60°+d und die zwei Winkelabstände zwischen den restlichen Reihen 60°-d betragen, wobei jeder der Werte d unabhängig voneinander zwischen >0° und 10°, bevorzugt zwischen 1° und 10° und besonders bevorzugt zwischen 2° und 8°beträgt, mit der Maßgabe dass die Summe aller Winkel 360° beträgt.

Bei einer dazu alternativen Ausführungsform sind an der Innenumfangsfläche des Gehäuses fünf sich in der axialen Richtung erstreckende Reihen von Aufnahmen für Knetelemente vorgesehen, wobei die Winkelabstände zwischen jeweils vier benachbarten Reihen von Aufnahmen jeweils zwischen mehr als 70° und 120° betragen sowie die Winkelabstände zwischen den beiden restlichen benachbarten Reihen von Aufnahmen jeweils zwischen 20° und 70° betragen. Dabei ist es bevorzugt, wenn vier Winkelabstände des Querschnittumfangs der Gehäuseinnenwand zwischen 70° und 110° und besonders bevorzugt zwischen 80° und 100° betragen und die Winkelabstände zwischen den beiden restlichen benachbarten Reihen von Aufnahmen jeweils zwischen 30° und 60° und besonders bevorzugt zwischen 40° und 50° betragen, mit der Maßgabe, dass die Summe aller Winkel 360° beträgt.

Bei einer weiter bevorzugten Ausführungsform der Erfindung umfasst die Schneckenwelle einen Wellenstab, also eine Hauptwelle, mit kreisförmigem Querschnitt, auf dem die Flügelelemente aufsitzen, wobei sich zumindest zwei der Flügelelemente in dem Wert des Winkelabschnitts, über den sie sich auf dem Querschnittsumfang des Wellenstabes erstrecken, voneinander unterscheiden, nämlich insbesondere passend zu der ungleichen Verteilung der Knetelemente und der vorgesehenen axialen translatorischen Bewegung sind. Durch die Rotation und die axiale translatorische Bewegung der Schneckenwelle wird das zu mischende und zu knetende Material in einen Spalt zwischen dem jeweiligen Flügelelement und einem Knetelement hineingezogen, wobei durch die hierbei entstehende Scherung die gewünschte Misch- und Knetwirkung erzielt wird.

Vorzugsweise ist es hierbei vorgesehen, dass die Flügelelemente in zwei bis sechs und bevorzugt drei sich auf der Hauptwelle axial erstreckenden Reihen angeordnet sind, wobei sich jeweils alle Flügelelemente einer Reihe über den gleichen Winkelabschnitt des Querschnittsumfangs der Hauptwelle erstrecken können, sich aber die Werte der Winkelabschnitte, über den sich die Flügelelemente zumindest zwischen zwei verschiedenen Reihen erstrecken, voneinander unterscheiden können, aber nicht müssen. Beispielsweise ist es bevorzugt, dass die Flügelelemente in drei sich auf der Hauptwelle axial erstreckenden Reihen angeordnet sind und die Werte des Winkelabschnitts, über den sich die einzelnen Flügel einer Reihe über den Querschnittsumfang des Wellenstabes erstrecken, bei zwei der drei Reihen jeweils zwischen 20° und 175°, vorzugsweise zwischen 128° und 140° betragen und der Wert des Winkelabschnitts bei der dritten Reihe zwischen 20° und 120°, im bevorzugten Fall zwischen 110° und 116° beträgt.

Die vorliegende Erfindung erlaubt es auch, dass in verschiedenen sich in der axialen Richtung des Gehäuses der Misch- und Knetmaschine erstreckenden Abschnitten eine unterschiedliche Anzahl der an der Innenumfangsfläche des Gehäuses vorgesehenen Reihen von Aufnahmen mit Knetelementen besetzt ist und analog hierzu die hierzu korrespondierenden Abschnitte der Schneckenwelle im Querschnitt eine unterschiedliche Anzahl von Flügelelementen aufweisen. Vorzugsweise weist das Gehäuse der Misch- und Knetmaschine bei dieser Ausführungsform 2 bis 24, weiter bevorzugt 2 bis 16, besonders bevorzugt 3 bis 12 und ganz besonders bevorzugt 8 sich in axialer Richtung erstreckende Abschnitte auf, von denen mindestens ein Abschnitt und bevorzugt mindestens zwei Abschnitte mit einer anderen Anzahl an Knetelementen besetzt sind als der Rest der Abschnitte. Bei dieser Ausführungsform erstrecken sich die einzelnen Reihen von Aufnahmen mithin über alle Abschnitte hinweg, wobei die Verbindungslinie zwischen den Aufnahmen einer Reihe jeweils zumindest im Wesentlichen eine Gerade ist. Somit erlaubt es diese Ausführungsform, einfach durch unterschiedliches Bestücken von Abschnitten der vorhandenen Reihen von Aufnahmen mit Knetelementen eine für die Verfahrensführung optimale Unterteilung der Misch- und Knetmaschine in verschiedene Verfahrensabschnitten zu realisieren, ohne dass dabei ein oder mehrere Gehäuseschalen des Gehäuses ausgewechselt werden müssen.

Beispielsweise kann die Misch- und Knetmaschine acht Abschnitte aufweisen, die hinsichtlich der Bestückung mit Knetelementen sowie hinsichtlich der Anzahl und Geometrie der Flügelelemente jeweils so ausgestaltet sind, dass sich am stromaufwärtigen Ende ein Einzugsabschnitt, in dem die zu mischenden bzw. zu knetenden Bestandteile in die Maschine eingebracht werden, daran stromabwärts anschließend ein Schmelzabschnitt, in dem die Bestandteile geschmolzen werden, dann ein weiterer Einzugsabschnitt, in dem der Mischung ein oder mehrere weitere Bestandteile, wie Füllstoff, zugegeben werden, dann ein Misch- und Homogenisierabschnitt, in dem die Bestandteile des Materials möglichst homogen miteinander vermischt werden, dann ein weiterer Einzugsabschnitt, in dem der Mischung ein oder mehrere weitere Bestandteile, wie Additiv, zugegeben werden, dann ein weiterer Misch- und Homogenisierabschnitt und schließlich ein Entgasungsabschnitt, in dem die Mischung entgast wird, ausbildet. Dabei weisen die drei Einzugsabschnitte und der Entgasungsabschnitt bevorzugt einen einflügligen Schneckenwellenabschnitt sowie die Misch- und Homogenisierabschnitte bevorzugt einen dreiflügligen Schneckenwellenabschnitt auf. Zudem ist es bevorzugt, dass der Schmelzabschnitt aus zwei Verfahrensabschnitten aufgebaut ist, von denen der stromaufwärtige bevorzugt einen vierflügligen Schneckenwellenabschnitt und der stromabwärtige bevorzugt einen zweiflügligen Schneckenwellenabschnitt aufweist. Daher sind bevorzugt die einzelnen, bevorzugt sechs Reihen von Aufnahmen für Knetelemente in den zu diesen Schneckenwellenabschnitten korrespondierenden Abschnitten der Gehäusewand so mit Knetelementen bestückt, dass in den den Einzugsabschnitten entsprechenden Abschnitten der Gehäusewand eine Reihe von Aufnahmen mit Knetelementen besetzt ist, in den den Misch- und Homogenisierabschnitten entsprechenden Abschnitten der Gehäusewand drei Reihen von Aufnahmen mit Knetelementen besetzt sind, in dem stromaufwärtigen der beiden Verfahrensabschnitte des Schmelzabschnittes vier Reihen von Aufnahmen mit Knetelementen besetzt sind und in dem stromabwärtigen der beiden Verfahrensabschnitte des Schmelzabschnittes zwei Reihen von Aufnahmen mit Knetelementen besetzt sind.

Alternativ dazu oder auch zusätzlich dazu ist es auch möglich, dass in verschiedenen sich in der axialen Richtung des Gehäuses der Misch- und Knetmaschine erstreckenden Abschnitten jeweils die gleiche Anzahl der in der Innenumfangsfläche des Gehäuses vorgesehenen Reihen von Aufnahmen mit Knetelementen besetzt ist, aber in jedem der Abschnitte oder in zumindest einem der Abschnitte andere Reihen von Aufnahmen mit Knetelementen besetzt sind als in mindestens einem anderen Abschnitt. Analog hierzu müssen dann auch die korrespondierenden Abschnitte der Schneckenwelle mit der Anordnung der Flügelelemente entsprechend angepasst werden. Vorzugsweise weist das Gehäuse der Misch- und Knetmaschine bei dieser Ausführungsform 2 bis 24, weiter bevorzugt 2 bis 16, besonders bevorzugt 3 bis 12 und ganz besonders bevorzugt 8 sich in axialer Richtung erstreckende Abschnitte auf, von denen mindestens ein Abschnitt und bevorzugt mindestens zwei Abschnitte mit jeweils der gleichen Anzahl von Knetelementen, aber nicht die gleichen Reihen von Aufnahmen mit Knetelementen besetzt sind als der Rest der Abschnitte. Beispielsweise weist das Gehäuse vier sich in axialer Richtung erstreckende, benachbarte Abschnitte auf und weisen alle vier Abschnitte jeweils 6 gleich ausgebildete Reihen von Aufnahmen auf, von denen beispielsweise in dem ersten und dritten Abschnitt die Reihen 1, 3 und 5 und in dem zweiten und vierten Abschnitt die Reihen 2, 4 und 6 mit Knetelementen besetzt sind, wobei die Nummern der einzelnen Reihen jeweils im Querschnitt der Innenumfangsfläche des Gehäuses ausgehend von 0 Uhr im Uhrzeigersinn vergeben werden. Mithin fluchten bei dieser Ausführungsform die Knetelemente der einzelnen Abschnitte, also die mit Knetelemente bestückten Aufnahmen der einzelnen Abschnitte nicht miteinander. Auch bei dieser Ausführungsform erstrecken sich die einzelnen Reihen von Aufnahmen mithin über alle Abschnitte hinweg, wobei die Verbindungslinie zwischen den Aufnahmen einer Reihe jeweils zumindest im Wesentlichen eine Gerade ist. Somit erlaubt es auch diese Ausführungsform, einfach durch unterschiedliches Bestücken von Abschnitten der vorhandenen Reihen von Aufnahmen mit Knetelementen eine für die Verfahrensführung optimale Unterteilung der Misch- und Knetmaschine in verschiedene Verfahrensabschnitte zu realisieren, ohne dass dabei ein oder mehrere Gehäuseschalen des Gehäuses ausgewechselt werden müssen.

Bei den beiden vorgenannten Ausführungsformen muss die Schneckenwelle zu den Abschnitten der Reihen von Aufnahmen für Knetelemente korrespondierende Abschnitte aufweisen und müssen die Flügelelemente in den einzelnen Abschnitten an die die Besetzung der Reihen von Aufnahmen mit Knetelementen in den einzelnen Abschnitten angepasst werden. Dies kann dadurch erreicht werden, dass sich in den einzelnen Abschnitten die Anzahl der Flügelelemente voneinander so unterscheidet wie die Anzahl der in den korrespondierenden Abschnitten mit Knetelementen besetzten Reihen von Aufnahmen, und/oder dadurch, dass sich die Flügelelemente in den einzelnen Abschnitten über jeweils einen so angepassten Winkelabschnitt des Querschnittsumfangs des Wellenstabes erstrecken, dass die Winkelabstände der einzelnen Flügelelementreihen in den einzelnen Abschnitten mit der Anzahl und den Abständen der in den korrespondierenden Abschnitten mit Knetelementen besetzten Reihen von Aufnahmen korrespondieren. Mithin fluchten bei dieser Ausführungsform die Flügelelemente der einzelnen Abschnitte nicht zwingend miteinander.

So ist es gemäß einer ersten Variante vorzugsweise vorgesehen, dass von der Anzahl von Reihen von Aufnahmen für Knetelemente in einem ersten sich in axialer Richtung erstreckenden Abschnitt des Gehäuses eine erste Anzahl von Reihen von Knetelementen besetzt ist und in einem zweiten sich in axialer Richtung erstreckenden Abschnitt des Gehäuses eine zweite Anzahl von Reihen mit Knetelementen besetzt ist, wobei die zweite Anzahl von der ersten Anzahl verschieden ist. Dem ersten sich in axialer Richtung erstreckenden Abschnitt des Gehäuses ist ein erster sich in axialer Richtung erstreckender Abschnitt der Schneckenwelle zugeordnet, wo die Anzahl der Flügelelemente eine dritte Anzahl ist, und dem zweiten Abschnitt des Gehäuses ist ein zweiter sich in axialer Richtung erstreckender Abschnitt der Schneckenwelle zugeordnet, wo die Anzahl der Flügelelemente eine vierte Anzahl ist. Bei dieser Variante ist auch die vierte Anzahl von der dritten Anzahl verschieden. Dabei können die erste und dritte Anzahl gleich sein und die zweite und vierte Anzahl gleich sein. Allerdings ist es auch möglich, dass die erste und dritte Anzahl voneinander verschieden sind und die zweite und vierte Anzahl voneinander verschieden sind.

Gemäß einer zweiten Variante ist es vorgesehen, dass von der Anzahl von Reihen von Aufnahmen für Knetelemente in einem ersten sich in axialer Richtung erstreckenden Abschnitt des Gehäuses und einem dritten sich in axialer Richtung erstreckenden Abschnitt des Gehäuses (Letzteres bei gleichzeitiger Ausführung der ersten Variante) eine erste beziehungsweise dritte Anzahl von Reihen mit Knetelementen besetzt ist (Letzteres insbesondere bei gleichzeitiger Ausführung der ersten Variante) und in einem zweiten und einem vierten sich in axialer Richtung erstreckenden Abschnitt des Gehäuses dieselbe erste beziehungsweise dritte Anzahl von Reihen mit Knetelementen besetzt ist wie bei dem ersten beziehungsweise bei dem dritten Abschnitt des Gehäuses, wobei dem ersten und dritten Abschnitt des Gehäuses ein entsprechender erster und dritter sich in axialer Richtung erstreckender Abschnitt der Schneckenwelle zugeordnet ist und dem zweiten und vierten Abschnitt des Gehäuses ein zweiter und vierter sich in axialer Richtung erstreckender Abschnitt der Schneckenwelle zugeordnet ist, wobei die Anzahl der Flügelelemente im ersten und dritten Abschnitt der Schneckenwelle gleich ist wie bei dem zweiten und vierten Abschnitt der Schneckenwelle, wobei aber die Flügelelemente im zweiten und vierten Abschnitt gegenüber den Flügelelementen im ersten und dritten Abschnitt der Schneckenwelle um einen Versatzwinkel versetzt sind, sodass die Flügelelemente nicht fluchten. Bei einer Ausführungsform dieser zweiten Variante sind etwa die Flügelelemente in dem ersten und dritten Abschnitt der Schneckenwelle sowie dem zweiten und vierten Abschnitt der Schneckenwelle jeweils in sechs Reihen angeordnet und erstrecken sich über einen jeweils gleichen Winkel (Bogenmaß), wobei der Erstreckungswinkel für jeden der sechs Flügelelemente unterschiedlich oder gleich sein kann. Vorzugsweise sind die Flügelelemente in dem ersten beziehungsweise dritten Abschnitt der Schneckenwelle sowie dem zweiten und vierten Abschnitt der Schneckenwelle jeweils in sechs Reihen angeordnet und erstrecken sich jeweils über einen gleichen Winkelabschnitt des Querschnittumfangs des Wellenstabes von zwischen 15° und 75°, wobei der Versatzwinkel zwischen 10° und 20°, vorzugsweise 15° beträgt. Wird ein kleinerer Winkel (Bogenmaß) gewählt, etwa 15° bis 40°, kann die Anordnung der sechs Reihen von Flügelelementen auch unsymmetrisch (60° ± 30°) am Umfang erfolgen. Sowohl bei der ersten als auch der zweiten Variante lässt sich über die Förderstrecke für das Material in der Misch- und Knetmaschine abschnittsweise eine individuell an die Art des Materials und den gewünschten Prozess angepasste Lösung für die Ausgestaltung der Misch- und Knetmaschine finden.

In Weiterbildung des Erfindungsgedankens wird es vorgeschlagen, dass in einem ersten oder einem dritten Abschnitt der Schneckenwelle die Anzahl der Reihen von Flügelelementen der Anzahl von Reihen der Flügelelemente in einem weiteren Abschnitt der Schneckenwelle gleich ist, wobei aber die Flügelelemente im weiteren Abschnitt gegenüber den Flügelelementen im ersten beziehungsweise dritten Abschnitt der Schneckenwelle um einen Versatzwinkel versetzt sind, sodass die Flügelelemente nicht fluchten. Vorzugsweise sind die Flügelelemente in ihrem ersten beziehungsweise dritten Abschnitt sowie ihrem weiteren Abschnitt jeweils in sechs Reihen angeordnet und erstrecken sich über einen jeweils gleichen Winkel von zwischen 15° und 75°, wobei der Versatzwinkel zwischen 10° und 20°, vorzugsweise 15° beträgt.

Ein weiterer Gegenstand der vorliegenden Erfindung ist ein Gehäuse für eine Misch- und Knetmaschine, in welchem ein von der Innenumfangsfläche des Gehäuses begrenzter hohler Innenraum ausgebildet ist, wobei gemäß der Erfindung in dem Gehäuse mindestens sechs sich von der Innenumfangsfläche des Gehäuses in das Gehäuse zumindest abschnittsweise hinein erstreckende Aufnahmen für Knetelemente vorgesehen sind, wobei die Aufnahmen an der Innenumfangsfläche des Gehäuses in zumindest zwei sich in der axialen Richtung über zumindest einen Abschnitt der Innenumfangsfläche des Gehäuses erstreckenden Reihen angeordnet sind, wobei wenigstens zwei und bevorzugt alle der zumindest zwei Reihen jeweils mindestens drei, bevorzugt mindestens fünf und besonders bevorzugt mindestens acht Aufnahmen für Knetelemente umfassen, und wobei sich, zumindest in einem in axialer Richtung des Gehäuses erstreckendem Abschnitt, die Aufnahmen für Knetelemente, im Querschnitt des Gehäuses gesehen, über den durch die Innenumfangsfläche des Gehäuses definierten Umfang hinweg ungleichmäßig verteilen.

Vorzugsweise umfasst das Gehäuse wenigstens zwei Gehäusehälften und ist die Innenumfangsfläche des Gehäuses zylindrisch ausgestaltet. Daher ist es bevorzugt, dass das erfindungsgemäße Gehäuse für eine Misch- und Knetmaschine zumindest zwei Gehäuseteile umfasst, welche zum Öffnen des Gehäuses wegklappbar oder voneinander trennbar sind, und welches einen im Querschnitt kreisförmigen hohlen Innenraum bereitstellt, wobei gemäß der Erfindung in dem Gehäuse mindestens sechs sich von der Innenumfangsfläche des Gehäuses in das Gehäuse zumindest abschnittsweise hinein erstreckende Aufnahmen für Knetelemente vorgesehen sind, wobei die Aufnahmen an der Innenumfangsfläche des Gehäuses in zumindest zwei sich in der axialen Richtung über zumindest einen Abschnitt der Innenumfangsfläche des Gehäuses erstreckenden Reihen angeordnet sind, wobei mindestens zwei und bevorzugt alle der zumindest zwei Reihen jeweils mindestens drei (bevorzugt mindestens fünf und besonders bevorzugt mindestens acht) Aufnahmen für Knetelemente umfasst, und wobei sich, zumindest in einem in axialer Richtung des Gehäuses erstreckendem Abschnitt, die Aufnahmen für Knetelemente, im Querschnitt des Gehäuses gesehen, über den durch die Innenumfangsfläche des Gehäuses definierten Umfang hinweg ungleichmäßig verteilen. Die Aufnahmen können hierbei in einer Gehäuseschale des Gehäuses vorgesehen sein, die von dem restlichen Gehäuse abtrennbar ist. Vorzugsweise ist vorgesehen, dass jede Aufnahme eine sich durch die Gehäuseschale und Gehäusewand hindurch erstreckende Bohrung ist, in der ein Fixierelement angeordnet sein kann, das mit der Außenwand des Gehäuses verbunden ist. Gegebenenfalls kann durch einen in der Bohrung eingesteckten Hohlbolzen auch ein Fluid in den Innenraum zugeführt werden. Ein Bolzen in Bohrung kann ferner mit einem Temperaturfühler oder Druckfühler versehen sein.

Die zuvor für die erfindungsgemäße Misch- und Knetmaschine beschriebenen Merkmale sind, soweit anwendbar, auch für das erfindungsgemäße Gehäuse bevorzugt.

Zudem betrifft die vorliegende Erfindung eine Schneckenwelle für eine Misch- und Knetmaschine mit einem Wellenstab mit vorzugsweise kreisförmigem Querschnitt, auf dessen Umfangsfläche mindestens sechs sich von dem Wellenstab radial nach außen erstreckende Flügelelemente angeordnet sind, wobei die Flügelelemente auf dem Wellenstab in zumindest zwei sich in der axialen Richtung über zumindest einen Abschnitt der Umfangsfläche des Wellenstabes erstreckenden Reihen angeordnet sind, wobei mindestens eine, bevorzugt mindestens zwei und besonders bevorzugt alle der zumindest zwei Reihen - in der axialen Richtung gesehen - jeweils mindestens drei (bevorzugt mindestens fünf und besonders bevorzugt mindestens acht) Flügelelemente umfasst, und wobei sich zumindest zwei der Flügelelemente in dem Wert des Winkelabschnitts, über den sie sich über den Querschnittsumfang des Wellenstabes erstrecken, voneinander unterscheiden.

Vorzugsweise ist es hierbei vorgesehen, dass die Flügelelemente in drei sich auf der Hauptwelle axial erstreckenden Reihen angeordnet sind, wobei sich aber die Werte der Winkelabschnitte, über den sich die Flügelelemente über den Querschnittsumfang der Hauptwelle erstrecken, zumindest zwischen zwei verschiedenen Reihen unterscheiden können, aber nicht müssen. Beispielsweise ist es bevorzugt, dass die Werte des Winkelabschnitts, über den sich die einzelnen Flügel einer Reihe erstrecken, zwischen 20° und 120°, vorzugsweise zwischen 110° und 116° betragen und der Wert des Winkelabschnitts der zweiten und dritten Reihe zwischen 20° und 175°, im bevorzugten Fall zwischen 128° und 140° betragen.

Nachfolgend wird die vorliegende Erfindung unter Bezug auf die Zeichnung näher beschrieben, in der:
- Fig. 1a: eine perspektivische Ansicht einer erfindungsgemäßen Misch- und Knetmaschine zeigt;
- Fig. 1b: einen schematischen Längsschnitt durch die in der Fig. 1a gezeigte erfindungsgemäße Misch- und Knetmaschine zeigt;
- Fig. 1c: einen Querschnitt der oberen Gehäusehälfte der in der Fig. 1a gezeigten Misch- und Knetmaschine zeigt, bei welcher die obere Gehäusehälfte mit einem Knetbolzen bestückt ist;
- Fig. 2: einen Querschnitt durch die in der Fig. 1a gezeigte Misch- und Knetmaschine bei der Besetzung mit sechs Knetbolzen zeigt;
- Fig. 3: einen der Fig. 2 entsprechenden Schnitt bei der Besetzung mit vier Knetbolzen zeigt;
- Fig. 4: einen der Fig. 2 entsprechenden Schnitt bei der Besetzung mit drei Knetbolzen zeigt; und
- Fig. 5: einen der Fig. 2 entsprechenden Schnitt bei der Besetzung mit zwei Knetbolzen zeigt;
- Fig. 6a: die Winkelteilung bei einer zweiflügligen Schneckenwelle zeigt; und
- Fig. 6b: hierzu die Lage der Knetbolzen bei der sechsreihigen Anordnung aus Fig. 2 veranschaulicht;
- Fig. 7a: die Winkelteilung bei einer dreiflügligen Schneckenwelle zeigt; und
- Fig. 7b: hierzu die Lage der Knetbolzen bei der dreireihigen Anordnung aus Fig. 4 veranschaulicht;
- Fig. 8a: die Winkelteilung bei einer sechsflügligen Schneckenwelle zeigt; und
- Fig. 8b: hierzu die Lage der Knetbolzen bei der zweireihigen Anordnung aus Fig. 5 veranschaulicht;
- Fig. 9: die Lage der Flügelelemente bei einer Schneckenwelle zeigt, bei der eine vierflüglige Schneckenwelle einen dreiflügligen Abschnitt aufweist, und dazugehörig die Lage der entsprechenden Knetbolzen;
- Fig. 10: die Lage der Flügelelemente bei einer Schneckenwelle zeigt, bei der eine zweiflüglige Schneckenwelle einen dreiflügligen Abschnitt aufweist, und dazugehörig die Lage der entsprechenden Knetbolzen;
- Fig. 11: die Lage der Flügelelemente bei einer Schneckenwelle zeigt, bei der eine sechsflüglige Schneckenwelle einen dreiflügligen Abschnitt aufweist, und dazugehörig die Lage der entsprechenden Knetbolzen;
- Fig. 12a- d: in Abwandlung der Ausführungsform gemäß Fig. 6a und Fig. 6b eine zweiflüglige Schneckenwelle mit zwei, drei, vier beziehungsweise sechs Reihen von Knetbolzen zeigt;
- Fig. 12e: hierzu die Winkelteilung zeigt;
- Fig, 13a: in Abwandlung der Ausführungsform gemäß Fig. 7a und Fig. 7b eine dreiflüglige Schneckenwelle mit unterschiedlich großen Flügelelementen zeigt; und
- Fig. 13b: hierzu die Winkelteilung zeigt.

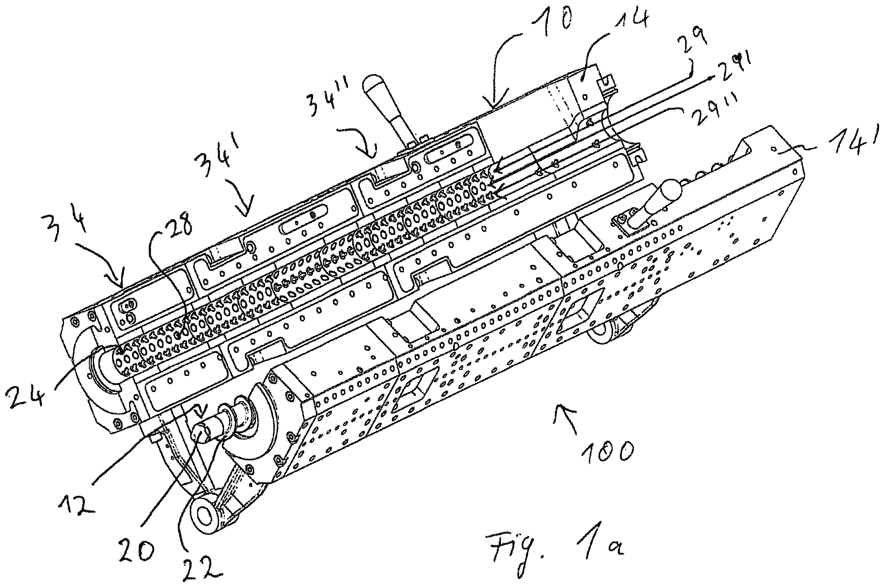

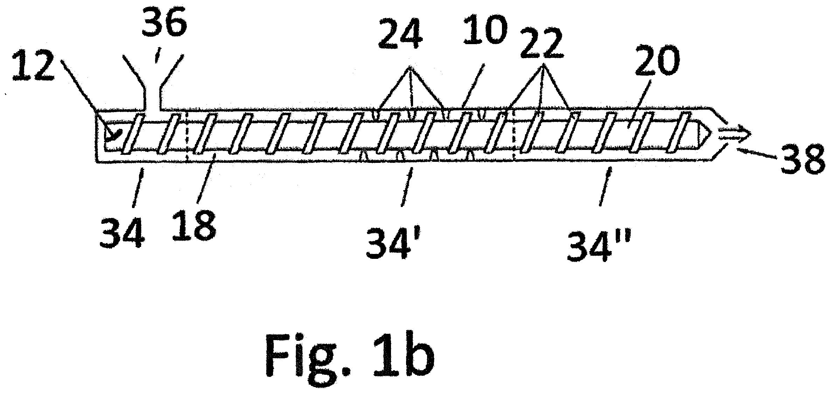

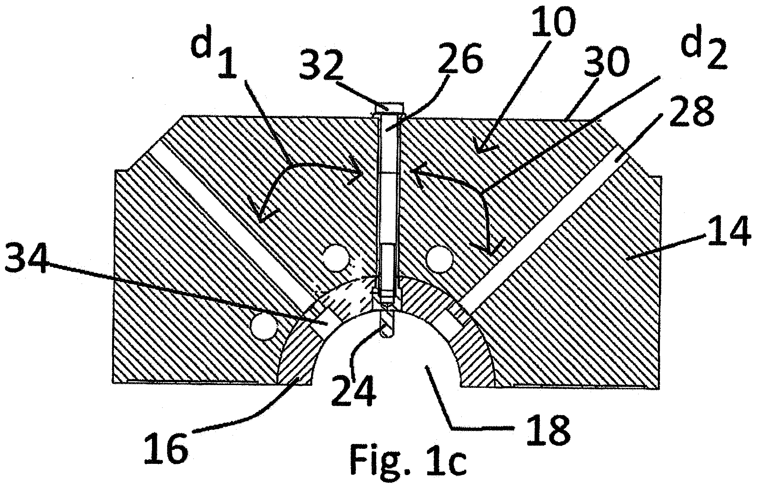

Die in den Fig. 1a, 1b und 1c in verschiedenen Ansichten schematisch gezeigte und im Ganzen mit 100 bezeichnete Misch- und Knetmaschine umfasst ein Gehäuse 10 und eine in dem Gehäuse 10 angeordnete Schneckenwelle 12. Das Gehäuse 10 umfasst zwei Gehäusehälften 14, 14', die innen mit einer sogenannten Gehäuseschale 16 ausgekleidet sind. Dabei wird die Gehäuseschale 16 in der vorliegenden Patentanmeldung als Bestandteil des Gehäuses 10 betrachtet. Die Innenumfangsfläche des Gehäuses 10 begrenzt, wenn die beiden Gehäusehälften 14, 14' geschlossen sind, einen zylindrischen hohlen Innenraum 18, also einen Innenraum 18 mit kreisförmigem Querschnitt.

Die Werkstoffe der Gehäuseschale 16 werden entsprechend den Extrudateigenschaften, wie z. B. Korrosion, Abrasion, Kombination aus beidem, tribologische Eigenschaften usw., gewählt. Üblich sind Gehäuseschalen 16 mit Spalt, der fertigungsbedingt durch die Teilung eines vorgefertigten Hohlzylinders, z. B. durch Drahterodieren, entsteht. Bekannt sind auch Halbschalen ohne Spalt für Extrudate, die auf Grund der Anforderungen an das Extrudat oder Extrudateigenschaften einen Spalt, wie z. B. Lebensmittel, thermische Sensitivität oder dergleichen, nicht zulassen.

Die Schneckenwelle 12 umfasst einen Wellenstab 20, auf dessen Umfangsfläche Flügelelemente 22 angeordnet sind. In den beiden Gehäusehälften 14, 14' sind Aufnahmen 28 für Knetelemente 24, also für Knetbolzen, Knetzähne und dergleichen, vorgesehen. Dabei ist jede der Aufnahmen 28, wie in der Fig. 1c gezeigt, eine Bohrung 28, welche sich von der Innenumfangsfläche der Gehäuseschale 16 durch die Gehäusewand hindurch erstreckt. Das untere, radial innen liegende Ende jeder Aufnahme 28 ist im Querschnitt vierkantig ausgestaltet. Jeder Knetbolzen 24 weist an seinem unteren Ende ein passgenau in das vierkantig ausgestaltete radial innere Ende der Aufnahmen 28 passendes Ende auf und ist dadurch im eingesetzten Zustand verdrehsicher in der Aufnahme 28 fixiert. In Abweichung von der konkret in der Fig. 1c dargestellten Ausführungsform kann das untere, radial innen liegende Ende jeder Aufnahme 28 im Querschnitt auch drei- oder sechskantig ausgestaltet sein.

Der Knetbolzen 24 ist an seinem in der Aufnahme 28 liegenden Ende mit einem in dem darüberliegenden Ende der Aufnahme 28 eingesetzten Fixierelement 26 durch Verschrauben verbunden. Dadurch werden die einzelnen Knetbolzen 24 von jeweils einem Fixierelement 26 gehalten, das an seinem dem Knetbolzen gegenüberliegenden Ende einen Außengewindeabschnitt aufweist, welcher über die Außenwand 30 des Gehäuses 10 hinaussteht, wo eine Mutter 32 aufschraubbar ist, um das Fixierelement 26 in dem Gehäuse 10 und damit auch den Knetbolzen 24 zu fixieren. Alternativ kann der Knetbolzen 24 auch ein Innengewinde für eine Schraube aufweisen und anstelle über das Fixierelement 26 und der Mutter 32 mit einer Schraube fixiert sein.

Wie insbesondere aus der Fig. 1a hervorgeht, erstrecken sich die voneinander jeweils gleich beabstandeten Aufnahmen 28 für die Knetbolzen 24 in jeder der beiden Gehäusehälften 14, 14', in der axialen Richtung gesehen, in Form von drei Reihen 29, 29', 29". Somit beträgt die Gesamtzahl der Reihen von Aufnahmen 29, 29', 29" des Gehäuses sechs. Unter Reihe wird im Sinne der vorliegenden Erfindung verstanden, dass eine über die voneinander in axialer Richtung beabstandeten Aufnahmen 28 einer Reihe 29, 29', 29" gelegte Verbindungslinie eine Gerade ist. Dabei sind die Aufnahmen 28 jeder Reihe 29, 29', 29" gegenüber denen benachbarter Reihen 29, 29', 29", in der axialen Richtung des Gehäuses 10 gesehen, geringfügig versetzt angeordnet, damit die einzelnen Flügelelemente 22 der Schneckenwelle 12 nicht mit den darin aufgenommenen Knetbolzen 24 kollidieren, wenn die Schneckenwelle 12 rotiert und sich gleichzeitig translatorisch vor- und zurückbewegt.

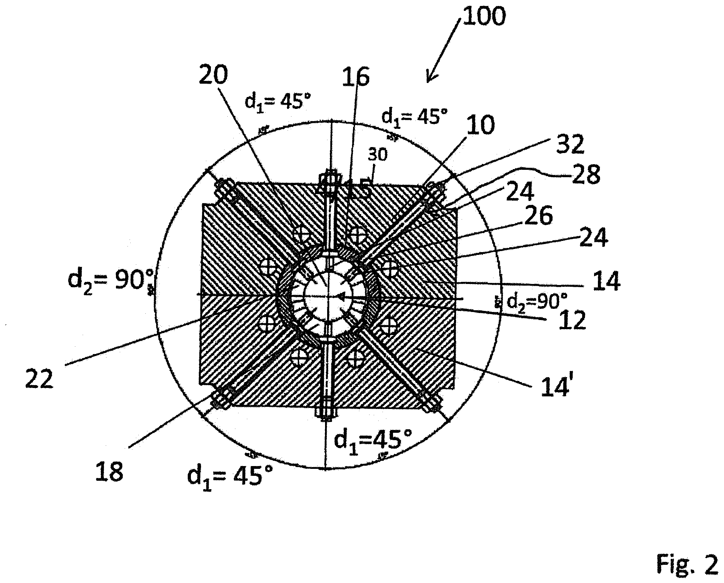

Die erfindungsgemäße Misch- und Knetmaschine 100 zeichnet sich, wie dies in den Fig. 2 bis 13 deutlicher dargestellt ist, dadurch aus, dass sich, zumindest in einem in axialer Richtung des Gehäuses 10 erstreckendem Abschnitt, die Aufnahmen 28 für Knetelemente 24, im Querschnitt des Gehäuses 10 gesehen, über den durch die Innenumfangsfläche des Gehäuses 10 definierten Umfang hinweg ungleichmäßig verteilen. Unter einer ungleichmäßigen Verteilung der Aufnahmen 28 für Knetelemente 24 über den durch die Innenumfangsfläche des Gehäuses 10 definierten Umfang wird dabei verstanden, dass - im Querschnitt des Gehäuses 10 betrachtet - von allen Winkelabständen d₁, d₂ zwischen jeweils zwei Aufnahmen 28 für Knetelemente 24 benachbarter Reihen 28 auf der Innenumfangsfläche des Gehäuses 10 mindestens zwei Winkelabstände d₁, d₂ voneinander verschieden sind.

Das Gehäuse 10 ist vorzugsweise mittels eines oder mehrerer Thermogeräte temperierbar oder mit elektrischen Heizpatronen oder außen am Gehäuse angebrachten Heizplatten beheizbar und ist wasser- oder luftgekühlt, gegebenenfalls auch durch ein anderes Fluid gekühlt, etwa durch ein Öl oder eine sonstige Flüssigkeit oder ein spezielles Gas.

Wie in der Fig. 1b gezeigt, ist die Misch- und Knetmaschine in axialer Richtung in mehrere Verfahrensabschnitte 34, 34', 34" unterteilt, wobei jeder Verfahrensabschnitt 34, 34', 34" hinsichtlich der Anzahl an Knetbolzen 24 sowie der Anzahl und der Ausdehnung der Flügelelemente 24 auf dem Wellenstab 20 an die Funktion der einzelnen Verfahrensabschnitte 34, 34', 34" angepasst ist. Wie in der Fig. 1a dargestellt, sind in dem linken Abschnitt 34 und in dem rechten Abschnitt 34" der oberen Gehäusehälfte 14 von den drei Reihen 29, 29', 29" von Aufnahmen 28 für Knetbolzen 24 zwei Reihen, nämlich die obere Reihe 29 und die untere Reihe 29", mit Knetbolzen 24 bestückt, wohingegen die mittlere Reihe 29' nicht mit Knetbolzen 24 bestückt ist. Im Unterschied dazu ist in dem mittleren Abschnitt 34' der oberen Gehäusehälfte 14 von den drei Reihen 29, 29', 29" von Aufnahmen 28 für Knetbolzen 24 eine Reihe, nämlich die mittlere Reihe 29', mit Knetbolzen 24 bestückt, wohingegen die obere Reihe 29 und die untere Reihe 29" nicht mit Knetbolzen 24 bestückt ist.

Bei dem Verfahrensabschnitt 34 kann es sich beispielsweise um einen Einzugsabschnitt handeln, bei dem bei dem Verfahrensabschnitt 34' um einen Misch- und Homogenisierabschnitt und bei dem Verfahrensabschnitt 34" um einen Entgasungsabschnitt. Das zu mischende Ausgangsmaterial wird der Misch- und Knetmaschine 10 über den Fülltrichter 36 zugeführt, dann durch die Verfahrensabschnitte 34, 34', 34" geführt und schließlich über die Austrittsöffnung 38 abgeführt.

Anstelle der dargestellten Verfahrensabschnitte 34, 34', 34" kann die erfindungsgemäße Misch- und Knetmaschine 100 insbesondere auch vier Verfahrensabschnitte aufweisen.

Die Fig. 2 zeigt einen Querschnitt durch die in der Fig. 1a gezeigte Misch- und Knetmaschine 100, allerdings mit einer Besetzung aller sechs Reihen 28 jeweils mit Knetbolzen 24.

Anhand der Darstellung des die Misch- und Knetmaschine 100 umgebenden Kreises in der Fig. 2 ist es ersichtlich, dass jeweils zwei Reihen von Aufnahmen den Abstand d₁=45° zueinander haben, während die anderen Reihen von Aufnahmen benachbarter Gehäuse den Winkelabstand von d₂ = 90° zueinander aufweisen.

Anders, als bisher üblich, ist bei einer Anordnung mit sechs Reihen 29, 29', 29" von Aufnahmen 28 also keine gleichmäßige Verteilung über den Winkelbereich des Innenkreises, also in Teile von 60°, gegeben, sondern es ist eine Ungleichverteilung vorgesehen.

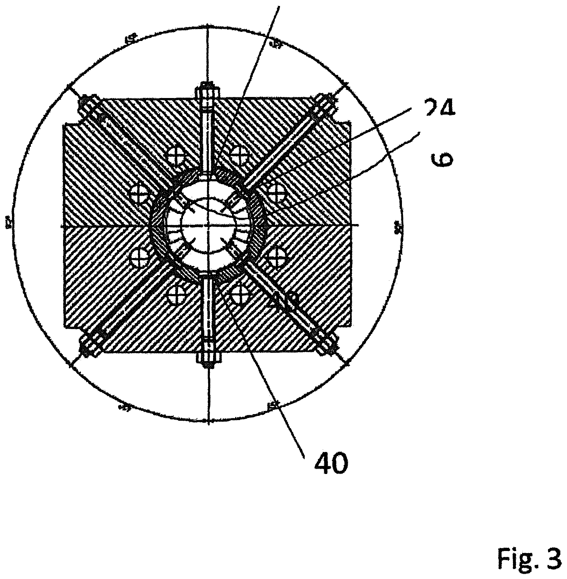

Die ungleichmäßige Winkelaufteilung hat den Vorteil, dass andere Besetzungen der Aufnahmen 28 in dem Gehäuse 10 möglich sind:
So veranschaulicht Fig. 3 die Besetzung von lediglich vier der sechs Reihen 29, 29', 29" von Aufnahmen 28 mit Knetbolzen 24, wobei in zwei der Reihen 29, 29', 29" von Aufnahmen 28 ein Blindbolzen 40 eingebracht ist. Der Blindbolzen 40 ist dort vorgesehen, wo der Abstand auf der Querschnittsumfangsfläche der Gehäuseinnenwand zu der nächsten Aufnahme nur 45° beträgt, d.h. zu den beiden Seiten hin. Dadurch haben die vier Knetbolzen 24 bei der Ausführungsform gemäß der Fig. 3 einen Winkelabstand von exakt 90°, wie man dies von herkömmlichen Misch- und Knetmaschinen kennt.

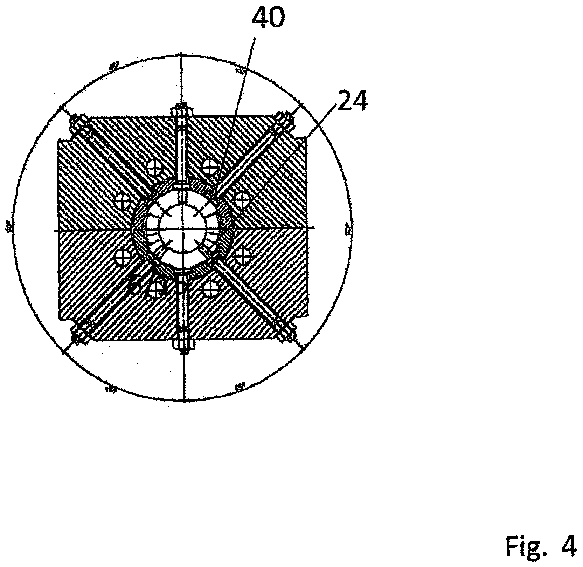

Bei der Ausführungsform gemäß der Fig. 4 sind drei der sechs Reihen 29, 29', 29" von Aufnahmen 28 mit Knetbolzen 24 bestückt und die anderen drei Reihen mit Blindbolzen 40. In diesem Falle sind die Knetbolzen 24 ungleich verteilt, da zwei Knetbolzen 24 einen Abstand von 90° zueinander aufweisen, und beide diese Knetbolzen 24 zu dem dritten Knetbolzen 24 einen Abstand von 135° aufweisen.

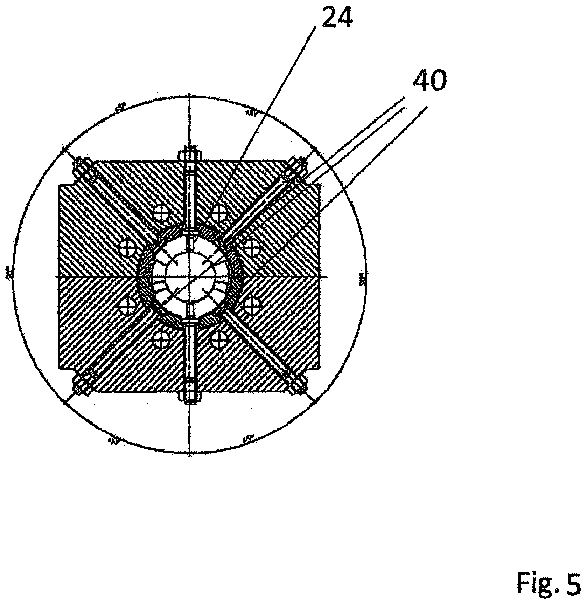

In der Fig. 5 ist veranschaulicht, dass nur zwei Knetbolzen 24 und vier Blindbolzen 40 vorgesehen sind. Die beiden Knetbolzen 24 liegen einander exakt gegenüber. Auch diese Knetbolzenanordnung entspricht die einer herkömmlichen Misch- und Knetmaschine.

Anhand der Fig. 2 bis 5 wurde erläutert, wie durch die Ungleichverteilung der sechs Reihen 29, 29', 29" von Aufnahmen 28 Anordnungen mit sechs, vier, drei und zwei Knetbolzen 24 verwirklichbar sind. Insbesondere können die beiden Gehäusehälften 14, 14' voneinander weggeklappt werden. Ein entsprechender Knetbolzen 24 kann zusammen mit dem entsprechenden Fixierelement 26 von innen eingesteckt werden, woraufhin dann von außen die Muttern 32 aufgeschraubt werden können. Genau so schnell kann ein Knetbolzen wieder herausgenommen werden und durch einen Blindbolzen 40 ersetzt werden. Ein Blindbolzen 40 ist ebenso schnell wieder herausgenommen, um nochmals einen Knetbolzen 24 einzusetzen.

Es versteht sich, dass die Schneckenwelle 12 in geeigneter Form passend zur Anordnung der Knetbolzen 24 vorgesehen sein muss. Hierbei kann eine flexibel mit Flügelelementen 22 bestückbare Schneckenwelle 12 vorgesehen werden, sodass bei einem Wechsel der Knetbolzenanordnung auch die Flügelanordnung gewechselt wird. Gegebenenfalls kann auch die komplette Schneckenwelle 12 ausgetauscht werden.

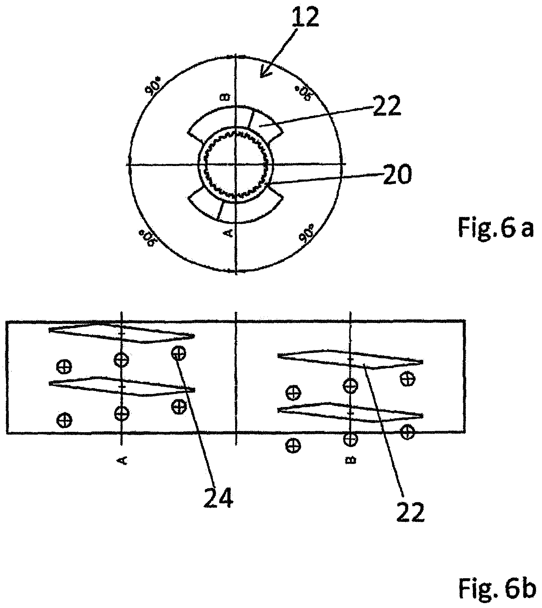

Die Fig. 6a zeigt im Schnitt die Schneckenwelle 12 mit den Flügelelementen 22 auf dem Wellenstab 20. Die in der Fig. 6a gezeigte zweiflüglige Schneckenwelle (zwei Flügel pro Umdrehung) ist mit einer sechsreihigen Bolzenanordnung wie in der Fig. 2 gezeigt umsetzbar. Die Knetbolzen 24 sind in der Fig. 6b veranschaulicht, wobei die Fig. 6b veranschaulicht, wie ein ausgerollter Außenmantel der Schneckenwelle 12 aussehen würde, und hierbei relativ zu dem Flügelelement 22 die Lage der Knetbolzen 24 veranschaulicht. Die Flügelelemente 22 bei der zweiflügligen Anordnung erstrecken sich im Beispielsfall der Fig. 6a über einen Winkel von ziemlich genau 90°. Diese Schneckenwelle 12 in Kombination mit den sechs Bolzenreihen ermöglicht eine erhöhte Scherung des Extrudats, da gegenüber dem bekannten drei bzw. vierflügeligen Schneckenwellen zwei bzw. drei zusätzliche Scherspalte vorhanden sind. Da die Flügelfläche, die beim Vorwärtshub des Extrudats in axialer Richtung in Richtung Gehäuseende schiebt, zusätzlich zur Förderung des Extrudats durch die Rotationsbewegung der Schneckenwelle auf Grund der Steigung der Flügel, kleiner ist als bei den Drei- bzw. Vierflügelelementen, ergibt sich eine verlängerte Verweilzeit des Extrudats im Zweiflügelelement. Gleichzeitig sind die Lücken zwischen den beiden Flügeln grösser als bei den Drei- bzw. Vierflügelelementen, dies erlaubt dem Extrudat leichter entgegen der Förderrichtung zurückzuströmen. Dadurch werden die Verweilzeit und die Axialvermischung weiter erhöht, und es kann noch mehr Scherung auf das Extrudat ausgeübt werden. Bei sechs Knetbolzen 24 bilden je drei Knetbolzen 24 in Kombination mit zwei axial hintereinanderliegenden Flügelelementen 22 des Zweiflügelelements einen Scherspalt und die beiden anderen Knetbolzen 24 eine Art Barriere, die verhindert, dass ein größerer Teilstrom um den Scherspalt herumfließt, ohne dass dieser Teilstrom zumindest etwas Scherung erfährt und gleichzeitig durch das Umfließen dieser "Barrieren" eine Dehnströmung erfährt, die sich vorteilhaft auf das distributive Mischen des Extrudats auswirkt.

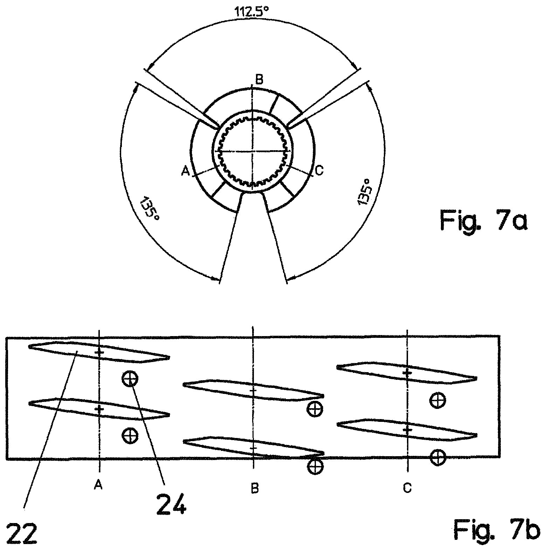

Die Fig. 7a zeigt eine dreiflüglige Anordnung, wie sie in Verbindung mit den drei Knetbolzenreihen aus der Fig. 4 umsetzbar ist. Die Fig. 7b zeigt die entsprechende ausgerollte Darstellung. Bei der dreiflügligen Anordnung gemäß der Fig. 7a ist vorgesehen, dass sich der eine Schneckenwellenflügel 22 über einen Winkel (ein Bogenmaß) von 112,5° erstreckt, die anderen beiden hingegen über einen Winkel (ein Bogenmaß) von 135°. Hier wird der Tatsache Rechnung getragen, dass, wie oben anhand der Fig. 4 erläutert, zwei der Knetbolzenabstände 135° betragen und der dritte 90° beträgt. Diese Ausführungsform ist nicht auf die exakten Werte von 135° bzw. 112,5° festgelegt, sondern es sind Variationen möglich, die ebenfalls zu der Ausführungsform des Gehäuses passen, das in der Fig. 2 dargestellt ist. Umgekehrt kann auch die Schneckenwelle 12 gemäß den Fig. 7a und 7b bei anderen Anordnungen als in der in der Fig. 2 gezeigten angesetzt werden. Durch die asymmetrische Anordnung der Flügelelemente 22 des Dreiflügelelements mit der besagten Winkelteilung und der Anordnung auf der Schneckenwelle 12 mit einer Lücke exakt nach unten, wird der gleichmäßige Fluss des Extrudats in das angrenzende Zweiflügelelement gewährleistet und jegliche Toträume sind beseitigt. Durch die asymmetrische Teilung und die zugehörige asymmetrische Bolzenanordnung steht eine entsprechende freie Fläche zur Verfügung, die eine Gestaltung der Flügelflächen zulässt, die beim bekannten symmetrischen Dreiflügelelement nicht möglich sind.

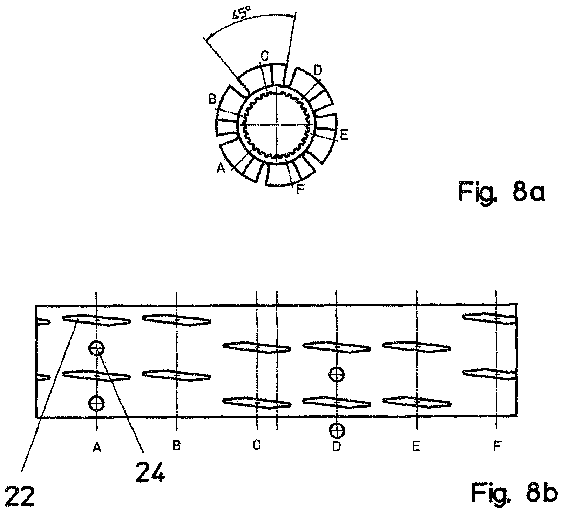

Die Fig. 8a und 8b veranschaulichen nun eine sechsflüglige Anordnung, wie sie zu einer zweireihigen Knetbolzenanordnung gemäß der Fig. 5 passt. Dabei sind die Knetelemente 24 mit den dazu gehörenden Ausnahmen jeder Reihe gegenüber denen benachbarter Reihen, in der axialen Richtung des Gehäuses gesehen, geringfügig versetzt angeordnet, damit die einzelnen Flügelelemente 22 der Schneckenwelle 12 nicht mit den darin aufgenommenen Knetbolzen 24 kollidieren, wenn die Schneckenwelle 12 rotiert und sich gleichzeitig translatorisch vor- und zurückbewegt. Jedes einzelne der sechs Flügelelemente 22 weist hier eine Erstreckung (ein Bogenmaß) von 45° auf. Im allgemeinen Fall liegt die Erstreckung - sofern die Abstände zwischen den Flügeln 60° beträgt - zwischen 15° und 75°. In Abwandlung von einer Gleichverteilung kann vorgesehen sein (nicht gezeigt), dass mindestens ein Flügelelement um 60° ± 30° versetzt ist, sodass es näher an dem einen Nachbarn als an dem anderen Nachbarn ist, Voraussetzung hierfür ist eine beliebige Erstreckung ε von 15° - 40°. Diese sechsflüglige Schneckenwelle erzeugt wenig Scherung und damit Temperaturerhöhung, da nur zwei Bolzenbahnen bestückt sind, aber auf Grund der hohen Anzahl von Flügelelementen ist die distributive Mischwirkung sehr hoch, da das Extrudat entsprechend oft aufgeteilt und neu orientiert wird.

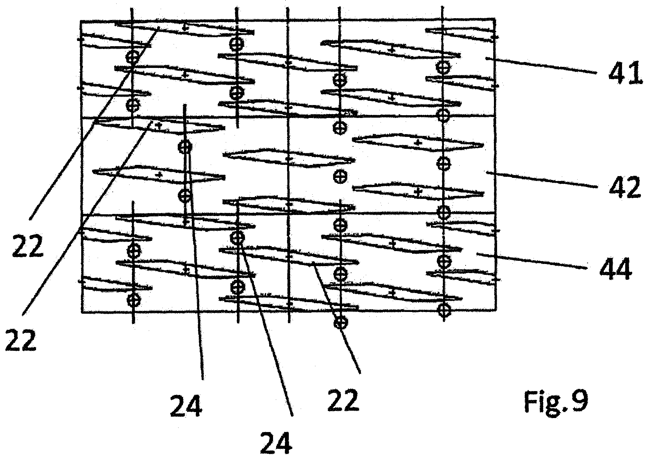

Bei der hier vorgestellten flexiblen Bolzenanordnung ist es auch möglich, unterschiedliche Schneckenabschnitte (die in der Erstreckungsrichtung der Misch- und Knetmaschine also in Axialrichtung der Schneckenwelle 12 aufeinander folgen) unterschiedlich zu besetzen, wobei das Gehäuse passend mit Bolzen bestückt wird: So veranschaulicht die Fig. 9 den Übergang von einem vierflügligen Abschnitt 40 und zugehörigen vier Knetbolzenreihen zu einem dreiflügligen Abschnitt 32 und zugehörigen drei Knetbolzenreihen und einem weiteren vierflügligen Abschnitt 44 mit wieder vier Knetbolzenreihen.

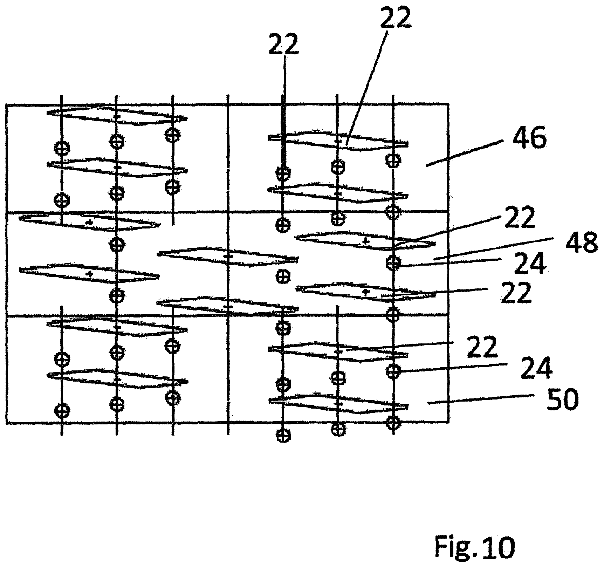

Die Fig. 10 veranschaulicht einen zweiflügligen Abschnitt 46 mit sechs Knetbolzenreihen, der in einen dreiflügligen Abschnitt 48 mit drei Knetbolzenreihen übergeht, worauf wiederum ein zweiflügliger Abschnitt 50 mit sechs Knetbolzenreihen folgt.

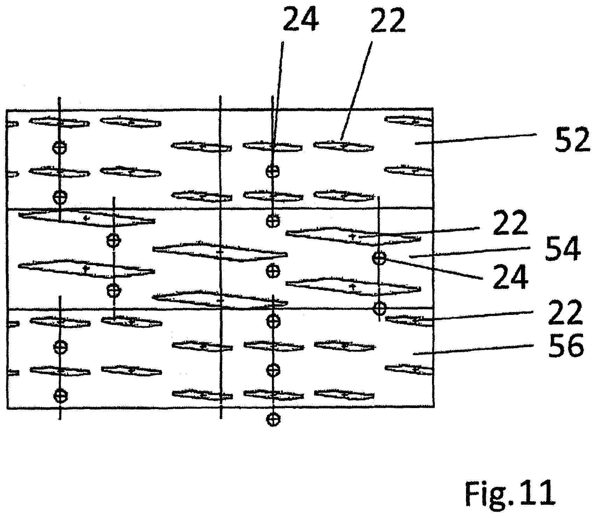

Die Fig. 11 veranschaulicht den Übergang von einem sechsflügligen Abschnitt 52 mit zwei Knetbolzenreihen zu einem dreiflügligen Abschnitt 54 mit drei Knetbolzenreihen und nochmals zu einem sechsflügligen Abschnitt 56 mit zwei Knetbolzenreihen.

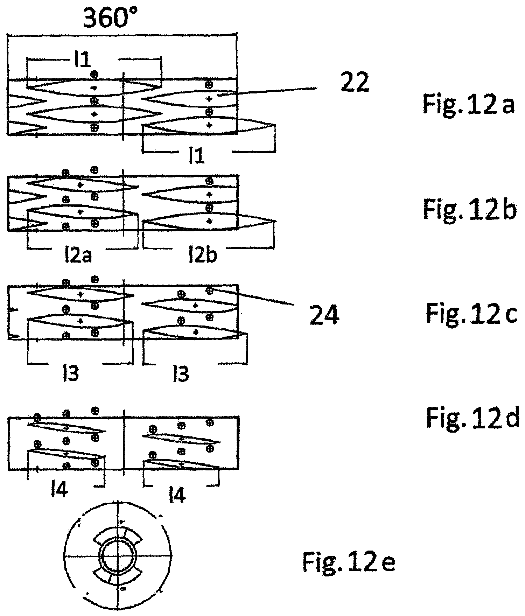

Die Fig. 12a bis d zeigen für eine zweiflüglige Ausführungsform einer Schneckenwelle 12 den Fall von zwei, drei, vier und sechs Knetbolzenreihen. Die Erstreckung (das Bogenmaß) der Flügelelemente 22 beträgt im Falle der Fig. 12a gleich I₁ zwischen 20° und 210°. Im Falle der Fig. 12b beträgt I₂ₐ zwischen 20° und 175°, I_{2b} zwischen 20° und 210°. Im Falle der Fig. 12c beträgt I₃ zwischen 20° und 165°. Im Falle der Fig. 12d beträgt I₄ zwischen 20° und 120°.

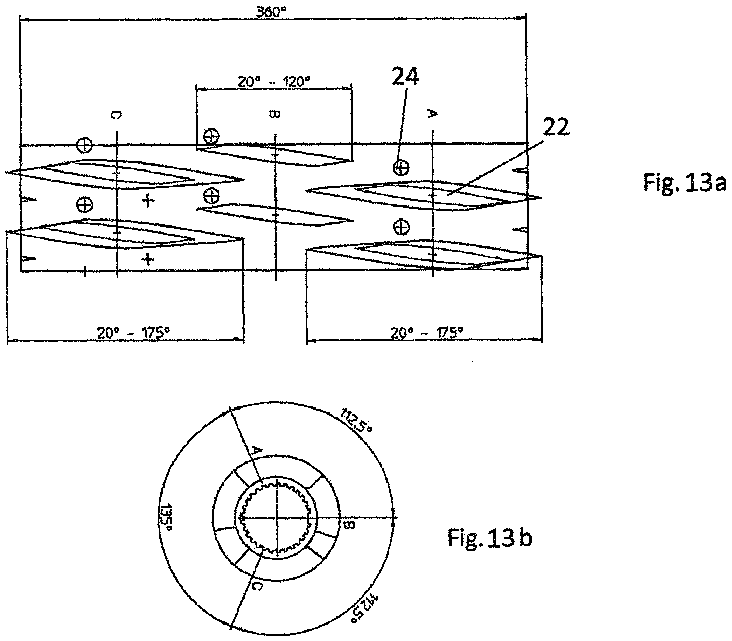

Die Fig. 13a zeigt ein Beispiel einer Schneckenwelle 12 mit unterschiedlichen Flügelelementen22 , von denen die einen eine Erstreckung (Bogenmaß) von zwischen 20° und 120° haben, die anderen von zwischen 20° und 175°.

Insgesamt ist durch die vorliegende Erfindung für eine hohe Flexibilität in der Besetzung des Gehäuses mit Knetbolzen oder Knetzähnen oder sonstigen Knetelementen gesorgt, wie anhand eines Vergleichs der vorliegenden Fig. 2 bis 5 ersichtlich, wozu passend die Schneckenwelle mit geeigneten Flügelelementen ausgestattet ist.

Beispielsweise weist eine nicht-erfindungsgemässe Misch- und Knetmaschine die folgenden Merkmalskombinationen auf:
Die Misch- und Knetmaschine umfasst:
- ein Gehäuse, das aus mindestens zwei Gehäuseteilen zusammengesetzt ist, welche zum Öffnen des Gehäuses voneinander wegklappbar oder voneinander trennbar sind, und welches einen im Querschnitt kreisförmigen Innenraum bereitstellt,
- eine Schneckenwelle, die im Betrieb in dem Innenraum rotiert und sich gleichzeitig in einer axialen Richtung der Schneckenwelle translatorisch hin- und her bewegt,
- eine Mehrzahl von der Innenseite zumindest eines der Gehäuse nach innen ragenden Knetelementen, die in zumindest zwei Reihen angeordnet sind, wobei die Schneckenwelle Flügelelemente aufweist, die durch die Rotation und die translatorische Bewegung der Schneckenwelle ein zu mischendes und zu knetendes Material in einen Spalt zwischen dem jeweiligen Flügelelement und einem Knetelement hineinziehen, wobei durch eine hierbei entstehende Scherung eine Misch- und Knetwirkung erzielt wird,
wobei in dem Gehäuse eine Mehrzahl von Aufnahmen für eine entsprechende Mehrzahl von Reihen von Knetelementen vorgesehen ist, wobei sich die Aufnahme über den durch den kreisförmigen Innenraum definierten Kreisbogen hinweg ungleichmäßig verteilen.

Bei der zuvor genannten Misch- und Knetmaschine kann jede Aufnahme über einen Durchlass, insbesondere für ein Fixierelement, mit einer Außenwand des Gehäuses verbunden sein.

Bei der Misch- und Knetmaschine kann es im Gehäuse n Reihen von Aufnahmen geben, wobei n eine natürliche Zahl ≥ 2 ist, und wobei die Winkelabstände d₁, d₂ zwischen zwei benachbarten Aufnahmen gegenüber dem Wert von 360°/n und zumindest 1°, bevorzugt zumindest 2,5°, besonders bevorzugt mindestens 5°, ganz besonders bevorzugt um mindestens 10° abweichen.

Bei der Misch- und Knetmaschine können zumindest in einem Abschnitt der Misch- und Knetmaschine n Reihen von Aufnahmen für Knetelemente vorgesehen sein, wobei höchstens n-1 Reihen von Aufnahmen von Knetelementen besetzt sind.

Bei der Misch- und Knetmaschine können zumindest in einem Abschnitt der Misch- und Knetmaschine sechs Reihen von Aufnahmen für Knetelemente vorgesehen sein, die unter Bildung von drei Paaren paarweise am Kreisbogen einander gegenüberliegen, wobei von den Winkelabständen zwischen den drei Paaren zwei Abstände zwischen 40° und 50° liegen und ein Abstand zwischen 80° und 100° beträgt.

Bei der Misch- und Knetmaschine können die Flügelelemente auf einem Wellenstab mit kreisförmigem Querschnitt aufsitzen, und bei dem sich zumindest zwei der Flügelelemente in dem Wert des Winkels, über den sie sich erstrecken, voneinander unterscheiden.

Bei der Misch- und Knetmaschine können zumindest in einem Abschnitt der Misch- und Knetmaschine die Flügelelemente in drei Reihen angeordnet sein, wobei sich in einer Reihe jeweils alle Flügelelemente über den gleichen Winkel erstrecken, wobei die Werte des Winkels, über den sich die drei Flügelelemente erstrecken, bei zweien der drei Reihen zwischen 20° und 175° beträgt, bei der dritten Reihe 20° und 120° beträgt.

Bei der Misch- und Knetmaschine kann von einer vorbestimmten Anzahl von Reihen von Aufnahmen für Knetelemente in einem ersten Abschnitt des Gehäuses eine erste Anzahl von Reihen mit Knetelementen besetzt sein und in einem zweiten Abschnitt des Gehäuses eine zweite Anzahl von Reihen mit Knetelementen besetzt sein, wobei die zweite Anzahl von der ersten Anzahl verschieden ist, und wobei dem ersten Abschnitt des Gehäuses ein entsprechender erster Abschnitt der Schneckenwelle zugeordnet ist, wo die Anzahl der Flügelelemente eine dritte Anzahl ist und der zweite Abschnitt des Gehäuses einem zweiten Abschnitt der Schneckenwelle entspricht, wo die Anzahl der Flügelelemente eine vierte Anzahl ist, wobei die vierte Anzahl von der dritten Anzahl verschieden ist.

Bei der Misch- und Knetmaschine kann von einer vorbestimmten Anzahl von Reihen von Aufnahmen für Knetelemente in einem ersten beziehungsweise einem dritten Abschnitt des Gehäuses eine erste beziehungsweise dritte Anzahl von Reihen mit Knetelementen besetzt sein und in einem zweiten beziehungsweise einem vierten Abschnitt des Gehäuses dieselbe erste beziehungsweise dritte Anzahl von Reihen mit Knetelementen besetzt sein wie bei dem ersten beziehungsweise bei dem dritten Abschnitt des Gehäuses, wobei dem ersten beziehungsweise dritten Abschnitt des Gehäuses ein entsprechender erster beziehungsweise dritter Abschnitt der Schneckenwelle zugeordnet ist und dem zweiten beziehungsweise vierten Abschnitt des Gehäuses ein weiterer Abschnitt der Schneckenwelle entspricht, wobei die Anzahl der Flügelelemente im ersten beziehungsweise dritten Abschnitt der Schneckenwelle gleich ist wie beim weiteren Abschnitt der Schneckenwelle.

Bei der Misch- und Knetmaschine können die Flügelelemente in dem ersten beziehungsweise dritten Abschnitt der Schneckenwelle sowie dem weiteren Abschnitt der Schneckenwelle jeweils in sechs Reihen angeordnet sein und sich über einen jeweils gleichen Winkel von zwischen 15° und 75° erstrecken, wobei der Versatzwinkel zwischen 10° und 20°, vorzugsweise 15° beträgt.

Ein Gehäuse für eine Misch- und Knetmaschine, das zumindest zwei Gehäuseteile umfasst, welche zum Öffnen des Gehäuses wegklappbar oder voneinander trennbar sind, und welches einen im Querschnitt kreisförmigen Innenraum bereitstellt, kann an dem Gehäuse eine Mehrzahl von Aufnahmen für eine entsprechende Mehrzahl von Reihen für Knetelemente vorgesehen haben, wobei sich die Aufnahmen über den durch den kreisförmigen Innenraum definierten Kreisbogen hinweg ungleichmäßig verteilen.

Bei einer Gehäusehälfte für ein Gehäuse einer Misch- und Knetmaschine mit einer Innenwand, die im Querschnitt die Form eines Kreissegments aufweist, wobei an der Innenwand zumindest zwei Reihen von Aufnahmen für Knetelemente angeordnet sind, kann ein Winkelabstand zweier benachbarter Reihen von dem Wert 360°/n, wobei n eine natürliche Zahl ≥ 2 ist, um zumindest 1°, bevorzugt 2,5°, besonders bevorzugt mindestens 5° und ganz besonders bevorzugt um mindestens 10° abweichen.

Bei einer Schale für eine Gehäusehälfte eines Gehäuses einer Misch- und Knetmaschine, wobei die Schale im Querschnitt die Form eines Kreissegments aufweist und zumindest zwei Reihen von Aufnahmen für Knetelemente umfasst, kann ein Winkelabstand zweier benachbarter Reihen von dem Wert 360°/n, wobei n eine natürliche Zahl ≥ 2 ist, um zumindest 1°, bevorzugt 2,5°, besonders bevorzugt mindestens 5° und ganz besonders bevorzugt um mindestens 10° abweichen.

Bei einer Schneckenwelle für eine Misch- und Knetmaschine mit einem Wellenstab mit kreisförmigem Querschnitt und einer Mehrzahl von Flügelelementen, die auf dem Wellenstab aufsitzen, können sich zumindest zwei der Flügelelemente in dem Wert des Winkels, über den sie sich erstrecken, voneinander unterscheiden.

Bei der vorgenannten Schneckenwelle können die Flügelelemente zumindest in einem Abschnitt der Misch- und Knetmaschine in drei Reihen angeordnet sein, wobei sich in einer Reihe jeweils alle Flügelelemente über den gleichen Winkel erstrecken, wobei die Werte des Winkels, über den sich die drei Flügelelemente erstrecken, bei zweien der drei Reihen zwischen 110° und 116° beträgt und bei der dritten Reihe 128° und 140° beträgt.

Bei der vorgenannten Schneckenwelle kann in einem ersten Abschnitt der Schneckenwelle die Anzahl der Flügelelemente sich von der Anzahl der Flügelelemente in einem zweiten Abschnitt der Schneckenwelle unterscheiden.

Bei einer Schneckenwelle für eine Misch- und Knetmaschine mit einem Wellenstab mit kreisförmigem Querschnitt und einer Mehrzahl von Flügelelementen, die auf dem Wellenstab aufsitzen, kann in einem ersten oder einem dritten Abschnitt der Schneckenwelle die Anzahl der Reihen von Flügelelementen der Anzahl von Reihen der Flügelelemente in einem weiteren Abschnitt der Schneckenwelle gleich sein, wobei aber die Flügelelemente im weiteren Abschnitt gegenüber den Flügelelementen im ersten beziehungsweise dritten Abschnitt der Schneckenwelle um einen Versatzwinkel versetzt sind, sodass die Flügelelemente nicht fluchten.

Bei der vorgenannten Schneckenwelle können die Flügelelemente in ihrem ersten beziehungsweise dritten Abschnitt sowie ihrem weiteren Abschnitt jeweils in sechs Reihen angeordnet sein und sich über einen jeweils gleichen Winkel von zwischen 15° und 75° erstrecken, und wobei der Versatzwinkel zwischen 10° und 20°, vorzugsweise 15° beträgt.

### Bezugszeichenliste

- 10: Gehäuse
- 12: Schneckenwelle
- 14, 14': Gehäusehälfte
- 16: Gehäuseschale
- 18: Innenraum
- 20: Wellenstab
- 22: Flügelelement
- 24: Knetelement/Knetbolzen
- 26: Fixierelement
- 28: Aufnahme/Bohrung für Knetelement
- 29, 29', 29": (axial erstreckende) Reihe von Aufnahme für Knetelemente
- 30: Außenwand
- 32: Mutter
- 34, 34', 34": Verfahrensabschnitt
- 36: Fülltrichter
- 38: Austrittsöffnung
- 40: Blindbolzen
- 41, 42, 44, 46, 48, 50, 52, 54, 56: Abschnitt
- 100: Misch- und Knetmaschine

- d₁, d₂: Winkelabstände zwischen zwei benachbarten Reihen von Aufnahmen für Knetelemente

## Patentansprüche

1. Misch- und Knetmaschine (100) für kontinuierliche Aufbereitungsprozesse umfassend:
- ein Gehäuse (10), in welchem ein von der Innenumfangsfläche des Gehäuses (10) begrenzter hohler Innenraum (18) ausgebildet ist,
- eine sich zumindest abschnittsweise in axialer Richtung durch den Innenraum (18) erstreckende Schneckenwelle (12), die im Betrieb in dem Innenraum (18) rotierbar und gleichzeitig in der axialen Richtung translatorisch hin- und her bewegbar ist, und
- mindestens sechs in dem Gehäuse (10) vorgesehene, sich von der Innenumfangsfläche des Gehäuses (10) in das Gehäuse (10) zumindest abschnittsweise hinein erstreckende Aufnahmen (28) für Knetelemente (24), wobei die Aufnahmen (28) an der Innenumfangsfläche des Gehäuses (10) in zumindest zwei sich in der axialen Richtung über zumindest einen Abschnitt der Innenumfangsfläche des Gehäuses (10) erstreckenden Reihen (29, 29', 29") angeordnet sind, wobei mindestens zwei der zumindest zwei Reihen (29, 29', 29") jeweils mindestens drei Aufnahmen (28) für Knetelemente (24) umfassen,
- wobei die Schneckenwelle (12) einen Wellenstab (20) umfasst, auf dessen Umfangsfläche mindestens zwei sich von dem Wellenstab (20) radial nach außen in Richtung der Innenumfangsfläche des Gehäuses (10) erstreckende Flügelelemente (22) angeordnet sind,
**dadurch gekennzeichnet, dass** sich die Aufnahmen (28) für Knetelemente (24) der zumindest zwei Reihen, im Querschnitt des Gehäuses (10) gesehen, über den durch die Innenumfangsfläche des Gehäuses (10) definierten Umfang hinweg ungleichmäßig verteilen.

2. Misch- und Knetmaschine (100) nach Anspruch 1, **dadurch gekennzeichnet, dass** auf dem sich in der axialen Richtung des Gehäuses (10) erstreckenden Abschnitt der Umfangsfläche des Wellenstabes (20) der Schneckenwelle (12), der in dem Abschnitt der Innenumfangsfläche des Gehäuses (10) liegt, über den sich die zumindest zwei, jeweils mindestens drei Aufnahmen (28) für Knetelemente (24) umfassenden Reihen (29, 29', 29") in der axialen Richtung des Gehäuses (10) erstrecken, mindestens sechs sich von dem Wellenstab (20) radial nach außen in Richtung der Innenumfangsfläche des Gehäuses (10) erstreckende Flügelelemente (22) angeordnet sind, wobei die Flügelelemente (22) auf diesem Abschnitt des Wellenstabes (20) in zumindest zwei sich in der axialen Richtung über diesen Abschnitt der Umfangsfläche des Wellenstabes (20) erstreckenden Reihen angeordnet sind, wobei mindestens zwei der zumindest zwei Reihen - in der axialen Richtung gesehen -jeweils mindestens drei Flügelelemente (22) umfassen.

3. Misch- und Knetmaschine (100) nach Anspruch 2, **dadurch gekennzeichnet, dass** sich die Flügelelemente (22) von zumindest einer der Reihen in dem Wert des Winkelabschnitts, über den sie sich über den Querschnittsumfang des Wellenstabes (20) erstrecken, von dem Wert des Winkelabschnitts der Flügelelemente von zumindest einer anderen der Reihen unterscheiden.

4. Misch- und Knetmaschine (100) nach einem der vorhergehenden Ansprüche, **dadurch gekennzeichnet, dass** wenigstens eine der Aufnahmen (28) eine Aussparung, Vertiefung oder Bohrung (28) ist, bevorzugt jede der Aufnahmen (28) eine Aussparung, Vertiefung oder Bohrung (28) ist, besonders bevorzugt jede der Aufnahmen (28) eine sich durch die Gehäusewand hindurch erstreckende Bohrung (28) ist und ganz besonders bevorzugt jede Aufnahme (28) eine Bohrung (28) ist, in welcher sich ein mit dem Knetelement (24) verbindbares Fixierelement (26) erstreckt, das an der Außenwand (30) des Gehäuses (10) durch eine Mutter (32) fixiert ist.

5. Misch- und Knetmaschine (100) nach einem der vorhergehenden Ansprüche, **dadurch gekennzeichnet, dass** die Innenumfangsfläche des Gehäuses (10) im Querschnitt kreisförmig ist und zumindest einer der im Querschnitt des Gehäuses (10) gesehenen Winkelabstände (d₁, d₂) zwischen jeweils zwei Aufnahmen (28) benachbarter Reihen (29, 29', 29") an der Innenumfangsfläche des Gehäuses (10) gegenüber dem Wert von 360°/n um zumindest 1°, bevorzugt um zumindest 2,5°, besonders bevorzugt um zumindest 5° und ganz besonders bevorzugt um zumindest 10° abweicht und bevorzugt alle Winkelabstände (d₁, d₂) zwischen jeweils zwei Aufnahmen (28) benachbarter Reihen (29, 29', 29") gegenüber dem Wert von 360°/n um zumindest 1°, bevorzugt um zumindest 2,5°, besonders bevorzugt um zumindest 5° und ganz besonders bevorzugt um zumindest 10° abweichen, wobei n die Anzahl der Reihen (29, 29', 29") der Aufnahmen (28) ist.

6. Misch- und Knetmaschine (100) nach einem der vorhergehenden Ansprüche, **dadurch gekennzeichnet, dass** an der Innenumfangsfläche des Gehäuses (10) 2 bis 11, bevorzugt 2 bis 10, weiter bevorzugt 3 bis 9, besonders bevorzugt 4 bis 8, ganz besonders bevorzugt 5 bis 7 und höchst bevorzugt 6 sich in der axialen Richtung über zumindest einen Abschnitt der Innenumfangsfläche des Gehäuses (10) erstreckende Reihen (29, 29', 29") von Aufnahmen (28) für Knetelemente (24) angeordnet sind, wobei jede der Reihen (29, 29', 29") jeweils mindestens fünf Aufnahmen (28) für Knetelemente (24) umfasst,.

7. Misch- und Knetmaschine (100) nach Anspruch 6, **dadurch gekennzeichnet, dass** an der Innenumfangsfläche des Gehäuses (10) sechs Reihen (29, 29', 29") von Aufnahmen (28) für Knetelemente (24) vorgesehen sind, von denen sich jeweils zwei Reihen unter Bildung von drei Paaren paarweise an der Innenumfangsfläche des Gehäuses (10) einander gegenüberliegen, wobei von den drei jeweils zwischen zwei benachbarten Paaren gebildeten Winkelabständen zwei Winkelabstände zwischen 20° und 70° betragen und ein Winkelabstand zwischen mehr als 70° und 120° beträgt, bevorzugt zwei Winkelabstände zwischen 30° und 60° betragen und ein Winkelabstand zwischen 70° und 110° beträgt und besonders bevorzugt zwei Winkelabstände zwischen 40° und 50° betragen und ein Winkelabstand zwischen 80° und 100° beträgt.

8. Misch- und Knetmaschine (100) nach einem der vorhergehenden Ansprüche, **dadurch gekennzeichnet, dass** sich zumindest zwei der Flügelelemente (22) der Schneckenwelle (12) in dem Wert des Winkelabschnitts, über den sie sich auf dem Querschnittsumfang des Wellenstabes (20) erstrecken, voneinander unterscheiden.

9. Misch- und Knetmaschine (100) nach Anspruch 8, **dadurch gekennzeichnet, dass** zumindest in einem sich in der axialen Richtung erstreckenden Abschnitt (41, 42, 44, 46, 48, 50, 52, 54, 56) der Misch- und Knetmaschine (100) die Flügelelemente (22) in drei sich auf dem Wellenstab (20) in axialer Richtung erstreckenden Reihen angeordnet sind, wobei sich jeweils alle Flügelelemente (22) einer Reihe über den gleichen Winkelabschnitt des Querschnittsumfangs des Wellenstabes (20) erstrecken, sich aber die Werte der Winkelabschnitte, über den sich die Flügelelemente (22) zumindest zwischen zwei verschiedenen Reihen erstrecken, voneinander unterscheiden, wobei vorzugsweise die Werte des Winkelabschnitts, über den sich die einzelnen Flügelelemente (22) einer Reihe erstrecken, bei zwei der drei Reihen zwischen 20° und 175° und vorzugsweise zwischen 128° und 140° betragen und der Wert des Winkelabschnitts bei der dritten Reihe zwischen 20° und 120° und vorzugsweise zwischen 110° und 116° beträgt.

10. Misch- und Knetmaschine (100) nach einem der vorhergehenden Ansprüche, **dadurch gekennzeichnet, dass** in verschiedenen sich in der axialen Richtung des Gehäuses (10) erstreckenden Abschnitten (41, 42, 44, 46, 48, 50, 52, 54, 56) eine unterschiedliche Anzahl der in der Innenumfangsfläche des Gehäuses (10) vorgesehenen Reihen (29, 29', 29") von Aufnahmen (28) mit Knetelementen (24) besetzt ist, wobei das Gehäuse (10) vorzugsweise 2 bis 24, weiter bevorzugt 2 bis 16, besonders bevorzugt 3 bis 12 und ganz besonders bevorzugt 8 sich in axialer Richtung erstreckende Abschnitte (41, 42, 44, 46, 48, 50, 52, 54, 56) aufweist, von denen mindestens ein Abschnitt und bevorzugt mindestens zwei Abschnitte mit einer anderen Anzahl an Knetelementen besetzt ist als der Rest der Abschnitte.

11. Misch- und Knetmaschine (100) nach Anspruch 10, **dadurch gekennzeichnet, dass** von der Anzahl von Reihen (29, 29', 29") von Aufnahmen (28) für Knetelemente (24) in einem ersten sich in axialer Richtung erstreckenden Abschnitt (28) des Gehäuses (10) eine erste Anzahl von Reihen (29, 29', 29") mit Knetelementen (24) besetzt ist und in einem zweiten sich in axialer Richtung erstreckenden Abschnitt des Gehäuses (10) eine zweite Anzahl von Reihen (29, 29', 29") mit Knetelementen (24) besetzt ist, wobei die zweite Anzahl von der ersten Anzahl verschieden ist, und dass dem ersten Abschnitt des Gehäuses (10) ein entsprechender erster sich in axialer Richtung erstreckender Abschnitt der Schneckenwelle (12) zugeordnet ist, wo die Anzahl der Flügelelemente (22) eine dritte Anzahl ist, und der zweite Abschnitt des Gehäuses (10) einem zweiten sich in axialer Richtung erstreckender Abschnitt der Schneckenwelle (12) zugeordnet ist, wo die Anzahl der Flügelelemente (22) eine vierte Anzahl ist, wobei die vierte Anzahl von der dritten Anzahl verschieden ist.

12. Misch- und Knetmaschine (100) nach einem der vorhergehenden Ansprüche, **dadurch gekennzeichnet, dass** in verschiedenen sich in der axialen Richtung des Gehäuses (10) erstreckenden Abschnitten (41, 42, 44, 46, 48, 50, 52, 54, 56) jeweils die gleiche Anzahl der in der Innenumfangsfläche des Gehäuses (10) vorgesehenen Reihen (29, 29', 29") von Aufnahmen (10) mit Knetelementen (24) besetzt ist, aber in jedem der Abschnitte (41, 42, 44, 46, 48, 50, 52, 54, 56) oder in zumindest einem der Abschnitte (41, 42, 44, 46, 48, 50, 52, 54, 56) andere Reihen (29, 29', 29") von Aufnahmen (28) mit Knetelementen (24) besetzt sind als in mindestens einem anderen Abschnitt (41, 42, 44, 46, 48, 50, 52, 54, 56), wobei es bevorzugt ist, dass das Gehäuse (10) 2 bis 24, weiter bevorzugt 2 bis 16, besonders bevorzugt 3 bis 12 und ganz besonders bevorzugt 8 sich in axialer Richtung erstreckende Abschnitte (41, 42, 44, 46, 48, 50, 52, 54, 56) aufweist, wobei mindestens in einem Abschnitt mindestens eine andere Reihe (29, 29', 29") von Aufnahmen mit Knetelementen (24) besetzt ist als in mindestens einem anderen Abschnitt.

13. Misch- und Knetmaschine (100) nach einem der vorhergehenden Ansprüche **dadurch gekennzeichnet, dass** von der Anzahl von Reihen (29, 29', 29") von Aufnahmen (28) für Knetelemente (24) in einem ersten und einem dritten sich in axialer Richtung erstreckenden Abschnitt des Gehäuses (10) eine erste und eine dritte Anzahl von Reihen (29, 29', 29") mit Knetelementen (24) besetzt ist und in einem zweiten und einem vierten sich in axialer Richtung erstreckenden Abschnitt des Gehäuses (10) dieselbe erste beziehungsweise dritte Anzahl von Reihen (29, 29', 29") mit Knetelementen (24) besetzt ist wie bei dem ersten und bei dem dritten Abschnitt des Gehäuses (10), wobei dem ersten und dritten Abschnitt des Gehäuses (10) ein entsprechender erster und dritter sich in axialer Richtung erstreckender Abschnitt der Schneckenwelle (12) zugeordnet ist und dem zweiten und vierten Abschnitt des Gehäuses (10) ein zweiter und vierter Abschnitt der Schneckenwelle (12) zugeordnet ist, wobei die Anzahl der Flügelelemente (22) im ersten beziehungsweise dritten Abschnitt der Schneckenwelle (12) gleich ist wie beim zweiten beziehungsweise vierten Abschnitt der Schneckenwelle (12), wobei aber die Flügelelemente (22) im zweiten und vierten Abschnitt gegenüber den Flügelelementen (22) im ersten und dritten Abschnitt der Schneckenwelle um einen Versatzwinkel versetzt sind, sodass die Flügelelemente (22) nicht fluchten.

14. Misch- und Knetmaschine (100) nach Anspruch 13, **dadurch gekennzeichnet, dass** die Flügelelemente (22) in dem ersten beziehungsweise dritten Abschnitt der Schneckenwelle (12) sowie dem zweiten und vierten Abschnitt der Schneckenwelle (12) jeweils in sechs Reihen angeordnet sind und sich über einen jeweils gleichen Winkelabschnitt der Querschnittumfangsfläche des Wellenstabes (20) von zwischen 15° und 75° erstrecken, wobei der Versatzwinkel zwischen 10° und 20°, vorzugsweise 15° beträgt.

15. Misch- und Knetmaschine (100) nach einem der vorhergehenden Ansprüche, **dadurch gekennzeichnet, dass** die Flügelelemente (22) in mindestens zwei sich auf dem Wellenstab (20) in axialer Richtung erstreckenden Reihen angeordnet sind, wobei in einem ersten oder einem dritten Abschnitt der Schneckenwelle (12) die Anzahl der Reihen von Flügelelementen (22) der Anzahl von Reihen der Flügelelemente (22) in einem weiteren Abschnitt der Schneckenwelle (12) gleich ist, wobei aber die Flügelelemente (22) im weiteren Abschnitt gegenüber den Flügelelementen (22) im ersten beziehungsweise dritten Abschnitt der Schneckenwelle (12) um einen Versatzwinkel versetzt sind, sodass die Flügelelemente (22) nicht fluchten, wobei vorzugsweise die Flügelelemente (22) in ihrem ersten beziehungsweise dritten Abschnitt sowie ihrem weiteren Abschnitt jeweils in sechs Reihen angeordnet sind und sich über einen jeweils gleichen Winkel von zwischen 15° und 75° erstrecken, und wobei der Versatzwinkel zwischen 10° und 20°, vorzugsweise 15° beträgt.

## Claims

1. A mixing and kneading machine (100) for continuous preparation processes comprising:
- a housing (10) in which a hollow interior (18) delimited by the inner circumferential surface of the housing (10) is formed,
- a screw shaft (12) which extends at least in portions in the axial direction through the interior (18) and which can be rotated in the interior (18) during operation and at the same time can be moved back and forth in the axial direction in a translational manner, and
- at least six receptacles (28) for kneading elements (24) that are provided in the housing (10) and extend at least in portions from the inner circumferential surface of the housing (10) into the housing (10), the receptacles (28) being arranged on the inner circumferential surface of the housing (10) in at least two rows (29, 29', 29") extending in the axial direction over at least a portion of the inner circumferential surface of the housing (10), at least two of the at least two rows (29, 29', 29") each comprising at least three receptacles (28) for kneading elements (24),
- the screw shaft (12) comprising a shaft bar (20), on the circumferential surface of which at least two blade elements (22) are arranged which extend radially outward from the shaft bar (20) in the direction of the inner circumferential surface of the housing (10),
**characterized in that** the receptacles (28) for kneading elements (24) of the at least two rows, viewed in the cross section of the housing (10), are distributed non-uniformly over the circumference defined by the inner peripheral surface of the housing (10).

2. The mixing and kneading machine (100) according to claim 1, **characterized in that** at least six blade elements (22) which extend radially outward from the shaft bar (20) in the direction of the inner circumferential surface of the housing (10) are arranged on the portion of the circumferential surface of the shaft bar (20) of the screw shaft (12) that extends in the axial direction of the housing (10) and is in the portion of the inner circumferential surface of the housing (10) over which the at least two rows (29, 29', 29"), which each comprise at least three receptacles (28) for kneading elements (24), extend in the axial direction of the housing (10), the blade elements (22) on this portion of the shaft bar (20) being arranged in at least two rows extending in the axial direction over said portion of the circumferential surface of the shaft bar (20), at least two of the at least two rows, viewed in the axial direction, each comprising at least three blade elements (22).

3. The mixing and kneading machine (100) according to claim 2, **characterized in that** the blade elements (22) of at least one of the rows differ in the value of the angular portion over which they extend over the cross-sectional circumference of the shaft bar (20) from the value of the angular portion of the blade elements of at least one other of the rows.

4. The mixing and kneading machine (100) according to one of the preceding claims, **characterized in that** at least one of the receptacles (28) is a recess, depression or bore (28), preferably each of the receptacles (28) is a recess, depression or bore (28), particularly preferably each of the receptacles (28) is a bore (28) extending through the housing wall, and very particularly preferably each receptacle (28) is a bore (28) in which a fixing element (26) which can be connected to the kneading element (24) extends, which fixing element is fixed to the outer wall (30) of the housing (10) by a nut (32).

5. The mixing and kneading machine (100) according to one of the preceding claims, **characterized in that** the inner circumferential surface of the housing (10) has a circular cross section, and at least one of the angular distances (d₁, d₂), viewed in the cross section of the housing (10), between in each case two receptacles (28) of adjacent rows (29, 29', 29") on the inner circumferential surface of the housing (10) differs from the value of 360°/n by at least 1°, preferably by at least 2.5°, particularly preferably by at least 5° and very particularly preferably by at least 10°, and preferably all angular distances (d₁, d₂) between in each case two receptacles (28) of adjacent rows (29, 29', 29") differ from the value of 360°/n by at least 1°, preferably by at least 2.5°, particularly preferably by at least 5° and very particularly preferably by at least 10°, where n is the number of rows (29, 29', 29") of the receptacles (28).

6. The mixing and kneading machine (100) according to one of the preceding claims, **characterized in that** 2 to 11, preferably 2 to 10, more preferably 3 to 9, particularly preferably 4 to 8, very particularly preferably 5 to 7 and most preferably 6, rows (29, 29', 29") of receptacles (28) for kneading elements (24) that extend in the axial direction over at least a portion of the inner circumferential surface of the housing (10) are arranged on the inner circumferential surface of the housing (10), each of the rows (29, 29', 29") in each case comprising at least five receptacles (28) for kneading elements (24).

7. The mixing and kneading machine (100) according to claim 6, **characterized in that** six rows (29, 29', 29") of receptacles (28) for kneading elements (24) are provided on the inner circumferential surface of the housing (10), of which two rows are in each case opposite each other in pairs on the inner circumferential surface of the housing (10) to form three pairs, where, of the three angular distances formed in each case between two adjacent pairs, two angular distances are between 20° and 70° and one angular distance is between more than 70° and 120°, preferably two angular distances are between 30° and 60° and one angular distance is between 70° and 110°, and particularly preferably two angular distances are between 40° and 50° and one angular distance is between 80° and 100°.

8. The mixing and kneading machine (100) according to one of the preceding claims, **characterized in that** at least two of the blade elements (22) of the screw shaft (12) differ from each other in the value of the angular portion over which they extend on the cross-sectional circumference of the shaft bar (20).

9. The mixing and kneading machine (100) according to claim 8, **characterized in that** in at least one portion (41, 42, 44, 46, 48, 50, 52, 54, 56) of the mixing and kneading machine (100) that extends in the axial direction, the blade elements (22) are arranged in three rows extending in the axial direction on the shaft bar (20), all blade elements (22) of a row in each case extending over the same angular portion of the cross-sectional circumference of the shaft bar (20), but the values of the angular portions over which the blade elements (22) extend at least between two different rows differing from one another, the values of the angular portion over which the individual blade elements (22) of a row extend preferably being between 20° and 175° for two of the three rows and preferably between 128° and 140°, and the value of the angular portion for the third row being between 20° and 120° and preferably between 110° and 116°.

10. The mixing and kneading machine (100) according to one of the preceding claims, **characterized in that** in different portions (41, 42, 44, 46, 48, 50, 52, 54, 56) extending in the axial direction of the housing (10), a different number of the rows (29, 29', 29") of receptacles (28) that are provided in the inner circumferential surface of the housing (10) is occupied by kneading elements (24), the housing (10) having preferably 2 to 24, more preferably 2 to 16, particularly preferably 3 to 12 and very particularly preferably 8 portions (41, 42, 44, 46, 48, 50, 52, 54, 56) extending in the axial direction, of which at least one portion, preferably at least two portions, is occupied by a different number of kneading elements than the rest of the portions.

11. The mixing and kneading machine (100) according to claim 10, **characterized in that**, of the number of rows (29, 29', 29") of receptacles (28) for kneading elements (24), a first number of rows (29, 29', 29") is occupied by kneading elements (24) in a first portion (28) of the housing (10) that extends in the axial direction, and a second number of rows (29, 29', 29") is occupied by kneading elements (24) in a second portion of the housing (10) that extends in the axial direction, the second number being different from the first number, and **in that** a corresponding first portion of the screw shaft (12) that extends in the axial direction is associated with the first portion of the housing (10), where the number of blade elements (22) is a third number, and a second portion of the screw shaft (12) that extends in the axial direction is associated with the second portion of the housing (10), where the number of blade elements (22) is a fourth number, the fourth number being different from the third number.

12. The mixing and kneading machine (100) according to one of the preceding claims, **characterized in that** in different portions (41, 42, 44, 46, 48, 50, 52, 54, 56) extending in the axial direction of the housing (10), the same number of the rows (29, 29', 29") of receptacles (10) that are provided in the inner circumferential surface of the housing (10) is occupied by kneading elements (24) in each case, but in each of the portions (41, 42, 44, 46, 48, 50, 52, 54, 56) or in at least one of the portions (41, 42, 44, 46, 48, 50, 52, 54, 56), other rows (29, 29', 29") of receptacles (28) are occupied by kneading elements (24) than in at least one other portion (41, 42, 44, 46, 48, 50, 52, 54, 56), it being preferred for the housing (10) to have 2 to 24, more preferably 2 to 16, particularly preferably 3 to 12 and very particularly preferably 8 portions (41, 42, 44, 46, 48, 50, 52, 54, 56) extending in the axial direction, at least one other row (29, 29', 29") of receptacles being occupied by kneading elements (24) at least in one portion than in at least one other portion.

13. The mixing and kneading machine (100) according to one of the preceding claims, **characterized in that**, of the number of rows (29, 29', 29") of receptacles (28) for kneading elements (24), a first and a third number of rows (29, 29', 29") are occupied by kneading elements (24) in a first and a third portion of the housing (10) that extend in the axial direction, and the same first or third number of rows (29, 29', 29") as in the first and third portions of the housing (10) is occupied by kneading elements (24) in a second and a fourth portion of the housing (10) that extend in the axial direction, a corresponding first and third portion of the screw shaft (12) that extend in the axial direction being associated with the first and third portion of the housing (10), and a second and fourth portion of the screw shaft (12) being associated with the second and fourth portion of the housing (10), the number of blade elements (22) in the first and third portion of the screw shaft (12) being the same as in the second and fourth portion of the screw shaft (12), respectively, but the blade elements (22) in the second and fourth portion being offset with respect to the blade elements (22) in the first and third portion of the screw shaft by an offset angle, such that the blade elements (22) are not aligned.

14. The mixing and kneading machine (100) according to claim 13, **characterized in that** the blade elements (22) in the first and third portion of the screw shaft (12) and the second and fourth portion of the screw shaft (12) are each arranged in six rows and extend over an angular portion of the cross-sectional circumferential surface of the shaft bar (20) of between 15° and 75°, which angular portion is identical in each case, the offset angle being between 10° and 20°, preferably 15°.

15. The mixing and kneading machine (100) according to one of the preceding claims, **characterized in that** the blade elements (22) are arranged in at least two rows extending in the axial direction on the shaft bar (20), the number of rows of blade elements (22) in a first or a third portion of the screw shaft (12) being the same as the number of rows of blade elements (22) in a further portion of the screw shaft (12), but the blade elements (22) in the further portion being offset with respect to the blade elements (22) in the first or third portion of the screw shaft (12) by an offset angle, such that the blade elements (22) are not aligned, the blade elements (22) preferably being arranged in six rows in each case in the first or third portion and the further portion thereof and each extending over an angle of between 15° and 75° that is identical in each case, and the offset angle being between 10° and 20°, preferably 15°.

## Revendications

1. Machine à mélanger et à pétrir (100) pour des processus de préparation en continu, comprenant :
- un boîtier (10) dans lequel est formé un espace intérieur (18) creux délimité par la surface circonférentielle intérieure du boîtier (10),
- un arbre à vis sans fin (12) qui s'étend, au moins dans certaines régions, dans la direction axiale à travers l'espace intérieur (18) et qui peut être tourné dans l'espace intérieur (18) pendant le fonctionnement et est en même temps mobile d'avant en arrière en translation dans la direction axiale, et
- au moins six réceptacles (28) pour des éléments de pétrissage (24) prévus dans le boîtier (10) et s'étendant, au moins dans certaines régions, dans le boîtier (10) depuis la surface circonférentielle intérieure du boîtier (10), les réceptacles (28) étant disposés sur la surface circonférentielle intérieure du boîtier (10) dans au moins deux rangées (29, 29', 29") s'étendant dans la direction axiale sur au moins une région de la surface circonférentielle intérieure du boîtier (10), au moins deux des au moins deux rangées (29, 29', 29") comprenant respectivement au moins trois réceptacles (28) pour des éléments de pétrissage (24),
- dans laquelle l'arbre à vis sans fin (12) comprend une tige d'arbre (20), sur la surface circonférentielle de laquelle au moins deux éléments d'aile (22) s'étendant radialement vers l'extérieur depuis la tige d'arbre (20) en direction de la surface circonférentielle intérieure du boîtier (10) sont disposés,
**caractérisée en ce que** les réceptacles (28) pour des éléments de pétrissage (24) des au moins deux rangées, vus dans la section transversale du boîtier (10), sont répartis de manière irrégulière sur la circonférence définie par la surface circonférentielle intérieure du boîtier (10).

2. Machine à mélanger et à pétrir (100) selon la revendication 1, **caractérisée en ce que** sur la région de la surface circonférentielle de la tige d'arbre (20) de l'arbre à vis sans fin (12) s'étendant dans la direction axiale du boîtier (10), laquelle région se trouve dans la région de la surface circonférentielle intérieure du boîtier (10), au-dessus de laquelle les au moins deux rangées (29, 29', 29") comprenant respectivement au moins trois réceptacles (28) pour des éléments de pétrissage (24) s'étendent dans la direction axiale du boîtier (10), sont disposés au moins six éléments d'aile (22), lesquels s'étendent radialement vers l'extérieur depuis la tige d'arbre (20) en direction de la surface circonférentielle intérieure du boîtier (10), les éléments d'aile (22) étant disposés sur ladite région de la tige d'arbre (20) dans au moins deux rangées s'étendant dans la direction axiale au-dessus de ladite région de la surface circonférentielle de la tige d'arbre (20), au moins deux des au moins deux rangées, vues dans la direction axiale, comprenant respectivement au moins trois éléments d'aile (22).

3. Machine à mélanger et à pétrir (100) selon la revendication 2, **caractérisée en ce que** les éléments d'aile (22) d'au moins l'une des rangées diffèrent par la valeur de la région angulaire, sur laquelle ils s'étendent sur la circonférence de section transversale de la tige d'arbre (20), par rapport à la valeur de la région angulaire des éléments d'aile d'au moins une autre des rangées.

4. Machine à mélanger et à pétrir (100) selon l'une des revendications précédentes, **caractérisée en ce qu'**au moins l'un des réceptacles (28) est un évidement, une cavité ou un alésage (28), chacun des réceptacles (28) est de préférence un évidement, une cavité ou un alésage (28), chacun des réceptacles (28) est de manière particulièrement préférée un alésage (28) s'étendant à travers la paroi de boîtier et chaque réceptacle (28) est de manière tout particulièrement préférée un alésage (28) dans lequel s'étend un élément de fixation (26) pouvant être relié à l'élément de pétrissage (24) et étant fixé à la paroi externe (30) du boîtier (10) par un écrou (32).

5. Machine à mélanger et à pétrir (100) selon l'une des revendications précédentes, **caractérisée en ce que** la surface circonférentielle intérieure du boîtier (10) est circulaire dans la section transversale et au moins l'une des distances angulaires (d₁, d₂), vue dans la section transversale du boîtier (10), entre respectivement deux réceptacles (28) de rangées (29, 29', 29") adjacentes sur la surface circonférentielle intérieure du boîtier (10), diffère d'au moins 1°, de préférence d'au moins 2,5°, de manière particulièrement préférée d'au moins 5° et de manière tout particulièrement préférée d'au moins 10°, par rapport à la valeur de 360°/n, et de préférence toutes les distances angulaires (d₁, d₂) entre respectivement deux réceptacles (28) de rangées (29, 29', 29") adjacentes diffèrent d'au moins 1°, de préférence d'au moins 2,5°, de manière particulièrement préférée d'au moins 5° et de manière tout particulièrement préférée d'au moins 10°, par rapport à la valeur de 360°/n, n étant le nombre de rangées (29, 29', 29") des réceptacles (28).

6. Machine à mélanger et à pétrir (100) selon l'une des revendications précédentes, **caractérisée en ce que** 2 à 11, de préférence 2 à 10, plus préférablement 3 à 9, de manière particulièrement préférée 4 à 8, de manière tout particulièrement préférée 5 à 7 et tout particulièrement 6 rangées (29, 29', 29") de réceptacles (28) pour des éléments de pétrissage (24), lesquelles rangées s'étendant dans la direction axiale sur au moins une région de la surface circonférentielle intérieure du boîtier (10), sont disposées sur la surface circonférentielle intérieure du boîtier (10), chacune des rangées (29, 29', 29") comprenant respectivement au moins cinq réceptacles (28) pour des éléments de pétrissage (24).

7. Machine à mélanger et à pétrir (100) selon la revendication 6, **caractérisée en ce que** six rangées (29, 29', 29") de réceptacles (28) pour des éléments de pétrissage (24) sont prévues sur la surface circonférentielle intérieure du boîtier (10), respectivement deux rangées se font face deux à deux sur la surface circonférentielle intérieure du boîtier (10) pour former trois paires, parmi les trois distances angulaires respectivement formées entre deux paires adjacentes, deux distances angulaires étant comprises entre 20° et 70° et une distance angulaire étant comprise entre plus de 70° et 120°, de préférence deux distances angulaires étant comprises entre 30° et 60° et une distance angulaire étant comprise entre 70° et 110° et de manière particulièrement préférée deux distances angulaires étant comprises entre 40° et 50° et une distance angulaire étant comprise entre 80° et 100°.

8. Machine à mélanger et à pétrir (100) selon l'une des revendications précédentes, **caractérisée en ce qu'**au moins deux des éléments d'aile (22) de l'arbre à vis sans fin (12) diffèrent l'un de l'autre par la valeur de la région angulaire sur laquelle ils s'étendent sur la circonférence de section transversale de l'arbre à vis sans fin (20).

9. Machine à mélanger et à pétrir (100) selon la revendication 8, **caractérisée en ce que** les éléments d'aile (22) sont disposés dans trois rangées s'étendant dans la direction axiale sur la tige d'arbre (20), au moins dans une région (41, 42, 44, 46, 48, 50, 52, 54, 56) de la machine à mélanger et à pétrir (100) s'étendant dans la direction axiale, respectivement tous les éléments d'aile (22) d'une rangée s'étendant sur la même région angulaire de la circonférence de section transversale de la tige d'arbre (20), mais les valeurs des régions angulaires, sur lesquelles s'étendent les éléments d'aile (22) au moins entre deux rangées différentes, différant les unes des autres, de préférence les valeurs de la région angulaire sur laquelle s'étendent les éléments d'aile (22) individuels d'une rangée étant comprises entre 20° et 175° et de préférence entre 128° et 140° pour deux des trois rangées, et la valeur de la région angulaire pour la troisième rangée étant comprise entre 20° et 120° et de préférence entre 110° et 116°.

10. Machine à mélanger et à pétrir (100) selon l'une des revendications précédentes, **caractérisée en ce que** dans différentes régions (41, 42, 44, 46, 48, 50, 52, 54, 56) s'étendant dans la direction axiale du boîtier (10), un nombre différent de rangées (29, 29', 29") de réceptacles (28) prévues dans la surface circonférentielle intérieure du boîtier (10) sont occupées par des éléments de pétrissage (24), le boîtier (10) présentant de préférence 2 à 24, plus préférablement 2 à 16, de manière particulièrement préférée 3 à 12 et de manière tout particulièrement préférée 8 régions (41, 42, 44, 46, 48, 50, 52, 54, 56) s'étendant dans la direction axiale, parmi lesquelles au moins une région et de préférence au moins deux régions sont occupées par un autre nombre d'éléments de pétrissage par rapport au reste des régions.

11. Machine à mélanger et à pétrir (100) selon la revendication 10, **caractérisée en ce que**, parmi le nombre de rangées (29, 29', 29") de réceptacles (28) pour des éléments de pétrissage (24) dans une première région (28) du boîtier (10) s'étendant dans la direction axiale, un premier nombre de rangées (29, 29', 29") sont occupées par des éléments de pétrissage (24) et, dans une second région du boîtier (10) s'étendant dans la direction axiale, un deuxième nombre de rangées (29, 29', 29") sont occupées par des éléments de pétrissage (24), le deuxième nombre étant différent du premier nombre, et **en ce qu'**une première région correspondante de l'arbre à vis sans fin (12) s'étendant dans la direction axiale est associée à la première région du boîtier (10), où le nombre d'éléments d'aile (22) est un troisième nombre, et une seconde région de l'arbre à vis sans fin (12) s'étendant dans la direction axiale est associée à la seconde région du boîtier (10), où le nombre d'éléments d'aile (22) est un quatrième nombre, le quatrième nombre étant différent du troisième nombre.

12. Machine à mélanger et à pétrir (100) selon l'une des revendications précédentes, **caractérisée en ce que** dans différentes régions (41, 42, 44, 46, 48, 50, 52, 54, 56) s'étendant dans la direction axiale du boîtier (10), le même nombre de rangées (29, 29', 29") de réceptacles (10) prévues dans la surface circonférentielle intérieure du boîtier (10) sont respectivement occupées par des éléments de pétrissage (24), mais dans chacune des régions (41, 42, 44, 46, 48, 50, 52, 54, 56) ou dans au moins une des régions (41, 42, 44, 46, 48, 50, 52, 54, 56), d'autres rangées (29, 29', 29") de réceptacles (28) sont occupées par des éléments de pétrissage (24) par rapport à dans au moins une autre région (41, 42, 44, 46, 48, 50, 52, 54, 56), de préférence, **en ce que** le boîtier (10) présente 2 à 24, plus préférablement 2 à 16, de manière particulièrement préférée 3 à 12 et de manière tout particulièrement préférée 8 régions (41, 42, 44, 46, 48, 50, 52, 54, 56) s'étendant dans la direction axiale, au moins une autre rangée (29, 29', 29") de réceptacles dans au moins une région étant occupée par des éléments de pétrissage (24) par rapport à dans au moins une autre région.

13. Machine à mélanger et à pétrir (100) selon l'une des revendications précédentes, **caractérisée en ce que**, parmi le nombre de rangées (29, 29', 29") de réceptacles (28) pour des éléments de pétrissage (24) dans une première et une troisième régions du boîtier (10) s'étendant dans la direction axiale, un premier et un troisième nombres de rangées (29, 29', 29") sont occupées par des éléments de pétrissage (24) et dans une deuxième et une quatrième régions du boîtier (10) s'étendant dans la direction axiale, le même premier ou troisième nombre de rangées (29, 29', 29") sont occupées par des éléments de pétrissage (24) que dans les première et troisième régions du boîtier (10), une première et une troisième régions correspondantes de l'arbre à vis sans fin (12) s'étendant dans la direction axiale étant associées aux première et troisième régions du boîtier (10) et une deuxième et quatrième régions de l'arbre à vis sans fin (12) étant associées aux deuxième et quatrième régions du boîtier (10), le nombre d'éléments d'aile (22) dans la première ou troisième région de l'arbre à vis sans fin (12) étant le même que dans la deuxième ou quatrième région de l'arbre à vis sans fin (12), mais les éléments d'aile (22) dans les deuxième et quatrième régions étant décalés d'un angle de décalage par rapport aux éléments d'aile (22) dans les première et troisième régions de l'arbre à vis sans fin, de sorte que les éléments d'aile (22) ne sont pas alignés.

14. Machine à mélanger et à pétrir (100) selon la revendication 13, **caractérisée en ce que** les éléments d'aile (22) sont respectivement disposés dans six rangées dans la première ou troisième région de l'arbre à vis sans fin (12) ainsi que dans les deuxième et quatrième régions de l'arbre à vis sans fin (12), et s'étendent sur une région angulaire respectivement identique de la surface circonférentielle de section transversale de la tige d'arbre (20) comprise entre 15° et 75°, l'angle de décalage étant compris entre 10° et 20°, de préférence étant de 15°.

15. Machine à mélanger et à pétrir (100) selon l'une des revendications précédentes, **caractérisée en ce que** les éléments d'aile (22) sont disposés dans au moins deux rangées s'étendant dans la direction axiale sur la tige d'arbre (20), dans une première ou une troisième région de l'arbre à vis sans fin (12), le nombre de rangées d'éléments d'aile (22) étant le même que le nombre de rangées d'éléments d'aile (22) dans une autre région de l'arbre à vis sans fin (12), mais les éléments d'aile (22) dans l'autre région étant décalés d'un angle de décalage par rapport aux éléments d'aile (22) dans la première ou troisième région de l'arbre à vis sans fin (12), de sorte que les éléments d'aile (22) ne sont pas alignés, les éléments d'aile (22) étant de préférence respectivement disposés dans six rangées dans leur première ou troisième région ainsi que dans leur autre région, et s'étendant sur un angle respectivement égal compris entre 15° et 75°, et l'angle de décalage étant compris entre 10° et 20°, de préférence étant de 15°.
